# EUROPEAN PATENT APPLICATION

(11) **EP 2 712 182 A1**
(43) Date of publication of application: **26.03.2014**
(21) Application number: 12784897.6
(22) Date of filing: 18.05.2012
(51) Int. Cl.: H04N 7/173, G06F 13/00, H04H 60/13

(54) **INTEGRATED BROADCAST/COMMUNICATION RECEPTION DEVICE**

(30) Priority: 19.05.2011 JP 2011112706
(71) Applicant: Nippon Hoso Kyokai, Tokyo 150-8001 (JP)
(72) Inventor: FUJISAWA Hiroshi, Tokyo 157-8510 (JP); MITSUYA Shigeaki, Tokyo 157-8510 (JP); MATSUMURA Kinji, Tokyo 157-8510 (JP); BABA Akitsugu, Tokyo 157-8510 (JP); TAKECHI Masaru, Tokyo 157-8510 (JP); KANATSUGU Yasuaki, Tokyo 157-8510 (JP); HAMADA Hiroyuki, Tokyo 157-8510 (JP)
(74) Representative: Tomlinson, Kerry John
(86) International application number: PCT/JP2012/062804
(87) International publication number: WO 2012/157753

(57) **Abstract**

The objective of the present invention is to provide an integrated broadcasting communications receiver capable of reliably receiving application activation information and reducing the costs for receiving the application activation information. The integrated broadcasting communications receiver (2) includes an application activation information extracting unit (220) that extracts application activation information from an event information table contained in a transport stream of broadcast data transmitted by a broadcast transmitting apparatus (1), an application obtaining unit (26) that obtains an application with reference to an address of an application server (3) described in the application activation information, an application executing unit (29), and an application controlling unit (25) that controls an activation state of the application in accordance with a control code described in the application activation information.

## Description

### {Technical Field}

The present invention relates to an integrated broadcasting communications receiver capable of utilizing services of integrated broadcasting communications. This application claims the foreign priority benefit of Japanese Patent Application No.2011-112706, filed on May 19, 2011 in the Japan Patent Office, the disclosure of which is herein incorporated by reference in its entirety.

### {Background Art}

In recent years, accompanying the development of broadcast digitalization and broadband communication, there has been performed the research and development for the realization of integrated broadcasting communications services. In such integrated broadcasting communications services, it is considered that the contents are delivered through different transmission paths of broadcast and communication, and the display screen of the delivered contents is integrated and displayed simultaneously on the receiver (integrated broadcasting communications receiver) such as a digital television and a personal computer. It is, for example, assumed that the delivered communication contents such as text information and videos are overlapped and displayed on the display screen of a broadcast program which is the contents delivered by broadcast, by using an application program such as a widget (or gadget) and a browser.

There has been conventionally known, as application activation information for controlling activation states (operations such as start and end) of an application displayed by digital broadcast, that the application is controlled and displayed by an AIT (Application Information Table) which describes control information (Non-Patent Document 1). According to this technology, by using control codes stored for each application in the AIT, it is possible to inform processes related to a life cycle of the application to the receiver from the broadcast station side, thereby dynamically controlling the life cycle of the application.

### {Citation List}

### {Non-Patent Literature}

{Non-Patent Document 1}
Association of Radio Industries and Businesses, "Application Information Table (AIT)", "Application Execution Engine Platform for Digital Broadcasting (ARIB STD-B23 Version 1.2)", Part 2, Chapter 10, 10.16.1, July 29, 2009

### {Summary of Invention}

### {Technical Problem}

However, in a configuration based on the above standard, since the AIT is transmitted as an ES (Elementary Stream) of TS (Transport Stream) of MPEG-2, there has been, for example, a problem that it is difficult to add an AIT as the ES if the number of ES is limited by operation. Further, in the configuration based on the above standard, there has been a possibility to cause a malfunction because the receiver receives an unknown ES. In addition, in the configuration based on the above standard, there has been a problem that it takes costs because it is necessary to change broadcast facilities at the broadcast station side.

The present invention has been made in view of the above problems, and the objective of the present invention is to provide an integrated broadcasting communications receiver capable of reliably receiving application activation information and reducing the costs for receiving the application activation information.

### {Solution to Problem}

In order to solve the above problems, an integrated broadcasting communications receiver according to claim 1 receives broadcast data via a broadcast wave from a broadcast transmitting apparatus, and obtains an application associated with a content contained in the broadcast data via a communication line from an application server, and is configured to include an application activation information extracting unit, an application obtaining unit, an application executing unit, and an application controlling unit.

With this configuration, by the application activation information extracting unit, the integrated broadcasting communications receiver extracts application activation information from an event information table contained in the transport stream of the broadcast data transmitted by the broadcast transmitting apparatus. Further, with reference to an address of the application server described in the application activation information, the integrated broadcasting communications receiver obtains the application from the application server by the application obtaining unit, and executes the application by the application executing unit. Furthermore, by the application controlling unit, the integrated broadcasting communications receiver controls the activation states of the application executed by the application executing unit, according to a control code described in the application activation information.

Therefore, the integrated broadcasting communications receiver is able to obtain the application activation information for obtaining and controlling the application via the broadcast wave, and obtain the application via the communication line.

Further, an integrated broadcasting communications receiver according to claim 2 is the integrated broadcasting communications receiver according to claim 1, wherein the application activation information extracting unit extracts the application activation information from a p/f region of the event information table.

Therefore, since the integrated broadcasting communications receiver extracts the application activation information from the p/f region of the event information table, it is possible to obtain and control the applications used in the content in the present broadcast and the content of next scheduled broadcast.

Further, an integrated broadcasting communications receiver according to claim 3 is the integrated broadcasting communications receiver according to claim 1, further including an application activation information server address extracting unit and an application activation information obtaining unit.

With this configuration, by the application activation information server address extracting unit, the integrated broadcasting communications receiver extracts an address of an application activation information server storing the application activation information from the event information table contained in the transport stream of the broadcast data transmitted by the broadcast transmitting apparatus. Further, with reference to the address of the application activation information server, the integrated broadcasting communications receiver obtains the application activation information from the application activation information server by the application activation information obtaining unit.

Therefore, the integrated broadcasting communications receiver is able to obtain the application activation information for obtaining and controlling the application and the address of the application activation information server storing the application activation information via the broadcast wave, and obtain the application via the communication line.

Further, an integrated broadcasting communications receiver according to claim 4 is the integrated broadcasting communications receiver according to claim 1, further including a push notification server address extracting unit and a push notification permission unit.

With this configuration, by the push notification server address extracting unit, the integrated broadcasting communications receiver extracts, from the event information table contained in the transport stream of the broadcast data transmitted by the broadcast transmitting apparatus, an address of a push notification server performing a push notification for controlling the activation state of the application associated with the content by the broadcast station providing the content. Further, by the push notification permission unit, with reference to the address of the push notification server, the integrated broadcasting communications receiver notifies the push notification server that the push notification is permitted. Then, with reference to the address of the application activation information server described in the push notification notified by the push notification server, the integrated broadcasting communications receiver obtains the application activation information from the application activation information server by the application activation information obtaining unit.

Therefore, by obtaining the address of the push notification server via the broadcast wave and permitting the push notification server to perform the push notification, the integrated broadcasting communications receiver is able to receive the push notification which is performed at an arbitrary timing by the broadcast station side (broadcast transmitting apparatus).

Further, an integrated broadcasting communications receiver according to claim 5 is the integrated broadcasting communications receiver according to claim 1, further including a push notification server list requesting unit and a comparing unit.

With this configuration, by the push notification server list requesting unit, the integrated broadcasting communications receiver requests a list of broadcast stations which have performed instructions of the push notification to the push notification server, to a push management server that manages the push notification server performing the push notification for controlling the activation state of the application associated with the content by the broadcast station providing the content. Further, the integrated broadcasting communications receiver compares by the comparing unit broadcast stations described in a push notification server list and the broadcast station providing the content currently being viewed. If a broadcast station described in the push notification server list matches the broadcast station providing the content currently being viewed, the integrated broadcasting communications receiver notifies the push notification server that the push notification is permitted. In addition, with reference to the address of the application activation information server described in the push notification notified by the push notification server, the application activation information obtaining unit obtains the application activation information from the application activation information server.

Therefore, if a broadcast station described in the push notification server list matches the broadcast station providing the content currently being viewed, by permitting the push notification server to perform the push notification, the integrated broadcasting communications receiver is able to receive the push notification which is performed at an arbitrary timing by the broadcast station side (broadcast transmitting apparatus).

### {Advantageous Effects of Invention}

According to the invention related to claim 1, it is possible to transmit the application activation information from the broadcast transmitting apparatus by using existing broadcast facilities, thereby reliably receiving the application activation information and reducing costs for receiving the application activation information.

According to the invention related to claim 2, it is possible to obtain and control the applications used in the content in the present broadcast and the content of next scheduled broadcast, thereby performing the applications in association with the contents.

According to the invention related to claims 3, 4, and 5, it is possible to receive the application activation information even if the application activation information is provided in different ways from a plurality of broadcast stations (a plurality of broadcast transmitting apparatuses).

### {Brief Description of Drawings}

FIG. 1 is a block diagram showing an internal configuration of an integrated broadcasting communications receiver according to a first embodiment of the present invention.
FIG. 2A is a schematic diagram for describing application activation information used in the integrated broadcasting communications receiver according to embodiments of the present invention, and shows an example of a descriptor composing the application activation information.
FIG. 2B is the schematic diagram for describing the application activation information used in the integrated broadcasting communications receiver according to embodiments of the present invention, and shows control codes in the application activation information.
FIG. 3 is a flowchart showing operations of the integrated broadcasting communications receiver according to the first embodiment of the present invention.
FIG. 4 is a block diagram showing an internal configuration of an integrated broadcasting communications receiver according to a second embodiment of the present invention.
FIG. 5 is a schematic diagram showing an example which describes in a file format the application activation information used in the integrated broadcasting communications receiver according to the embodiments of the present invention.
FIG. 6 is a flowchart showing operations of an integrated broadcasting communications receiver according to a second embodiment of the present invention.
FIG. 7 is a block diagram showing an internal configuration of an integrated broadcasting communications receiver according to a third embodiment of the present invention.
FIG. 8 is a flowchart showing operations of the integrated broadcasting communications receiver according to the third embodiment of the present invention.
FIG. 9 is a block diagram showing an internal configuration of an integrated broadcasting communications receiver according to a fourth embodiment of the present invention.
FIG. 10 is a flowchart showing operations of the integrated broadcasting communications receiver according to the fourth embodiment of the present invention.
FIG. 11 is a block diagram showing an internal configuration of an integrated broadcasting communications receiver according to a fifth embodiment of the present invention.
FIG. 12 is a flowchart showing operations of the integrated broadcasting communications receiver according to the fifth embodiment of the present invention.
FIG. 13 is a block diagram showing an internal configuration of an integrated broadcasting communications receiver according to a sixth embodiment of the present invention.
FIG. 14 is a block diagram showing an internal configuration of an integrated broadcasting communications receiver according to a seventh embodiment of the present invention.
FIG. 15 is a block diagram showing an internal configuration of an integrated broadcasting communications receiver according to an eighth embodiment of the present invention.
FIG. 16 is a block diagram showing an internal configuration of an integrated broadcasting communications receiver according to a ninth embodiment of the present invention.
FIG. 17 is a block diagram showing an internal configuration of an integrated broadcasting communications receiver according to a tenth embodiment of the present invention.
FIG. 18 is a block diagram showing an internal configuration of an integrated broadcasting communications receiver according to an eleventh embodiment of the present invention.
FIG. 19 is a block diagram showing an internal configuration of an integrated broadcasting communications receiver according to a twelfth embodiment of the present invention.
FIG. 20 is a block diagram showing an internal configuration of an integrated broadcasting communications receiver according to a thirteenth embodiment of the present invention.

### {Description of Embodiments}

The integrated broadcasting communications receiver according to the embodiments of the present invention will be described with reference to the drawings. In the following description, the same elements are denoted by the same reference numerals, and the detailed descriptions thereof will be omitted.

### [First embodiment]

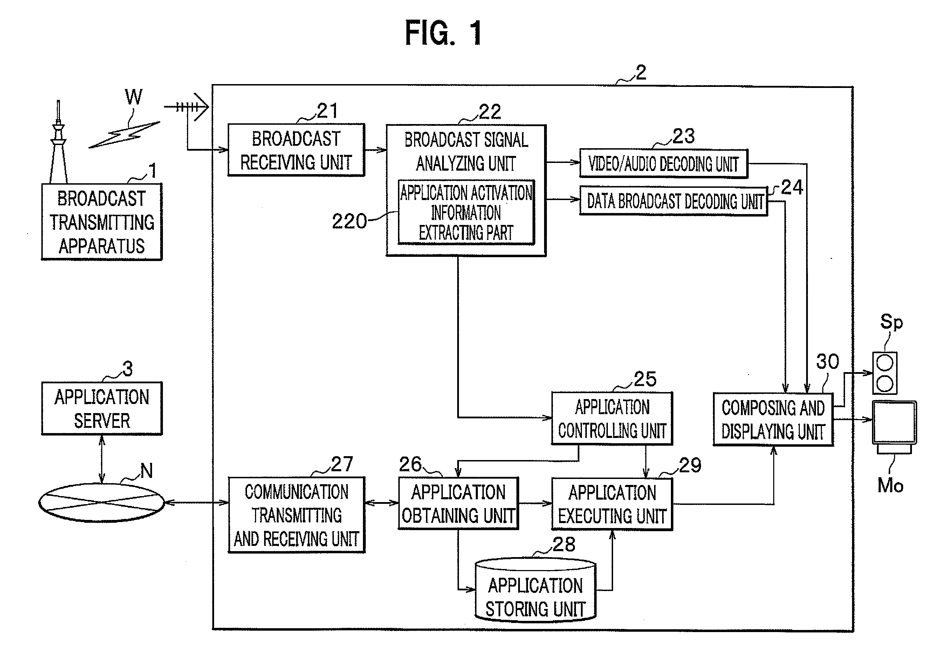

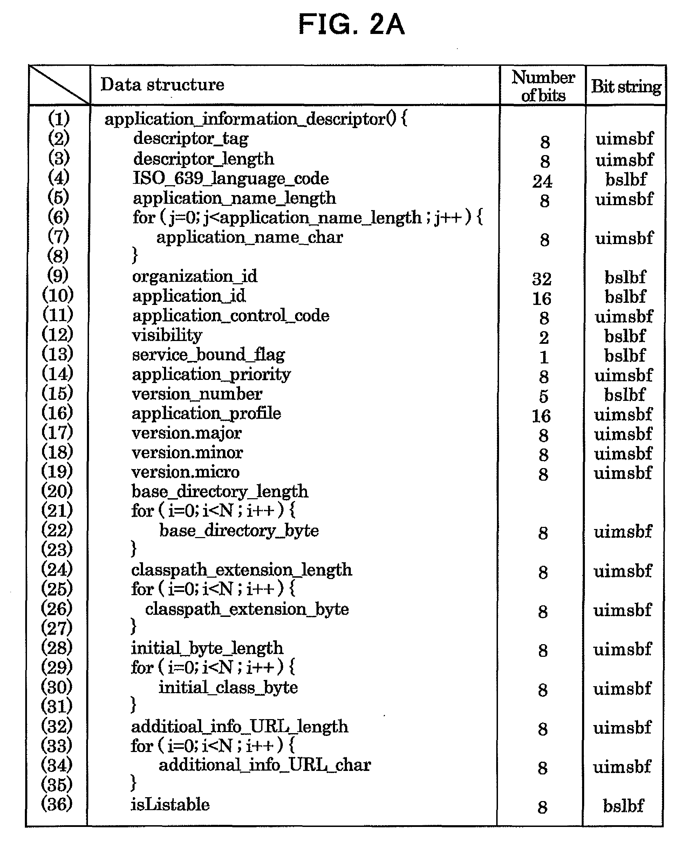

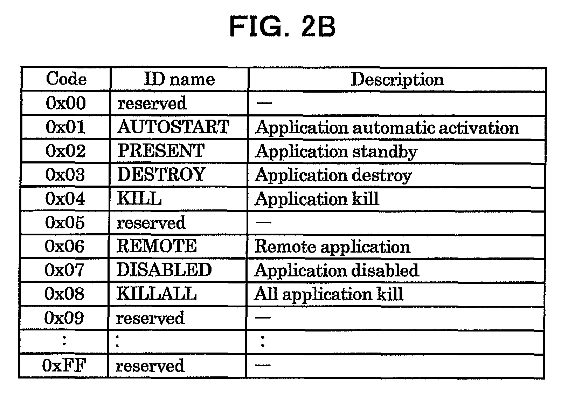

Hereinafter, an integrated broadcasting communications receiver 2 according to a first embodiment of the present invention will be described in detail with reference to FIGS. 1, 2A, and 2B. As shown in FIG. 1, the integrated broadcasting communications receiver 2 receives data and video/audio of the content broadcasted as broadcast data from a broadcast transmitting apparatus 1 via a broadcast wave W, and presents them to users. Further, as shown in FIG. 1, the integrated broadcasting communications receiver 2 obtains the applications associated with the contents of the broadcast program or the like via a communication line N, and presents them to the users.

Here, before making a detailed description of the integrated broadcasting communications receiver 2, the peripheral system configuration will be described. As shown in FIG. 1, the broadcast transmitting apparatus 1 transmits the broadcast data via the broadcast wave W to the integrated broadcasting communications receiver 2. Further, an application server 3 stores the applications associated with the contents in advance, and transmits the application via the communication line N to the integrated broadcasting communications receiver 2.

As shown in FIG. 1, the integrated broadcasting communications receiver 2 includes a broadcast receiving unit 21, a broadcast signal analyzing unit 22, a video/audio decoding unit 23, a data broadcast decoding unit 24, an application controlling unit 25, an application obtaining unit 26, a communication transmitting and receiving unit 27, an application storing unit 28, an application executing unit 29, and a composing and displaying unit 30.

The broadcast receiving unit 21 receives the broadcast data from the broadcast transmitting apparatus 1 via the broadcast wave W. Specifically, the broadcast receiving unit 21 receives the broadcast data from the broadcast transmitting apparatus 1, demodulates the broadcast data, and performs error correction and decoding such as TMCC (Transmission and Multiplexing Configuration Control) decoding. Further, as shown in FIG. 1, the broadcast receiving unit 21 outputs this as a TS (Transport Stream) of MPEG-2 to the broadcast signal analyzing unit 22.

The broadcast signal analyzing unit 22 analyzes broadcast signals of digital broadcast. Specifically, the broadcast signal analyzing unit 22 separates the TS, in which video/audio and data are multiplexed, into PES (Packetized Elementary Stream) data and section data. Then, as shown in FIG. 1, the broadcast signal analyzing unit 22 outputs the PES data to the video/audio decoding unit 23, and outputs the section data to the data broadcast decoding unit 24. As shown in FIG. 1, the broadcast signal analyzing unit 22 includes an application activation information extracting part 220.

The application activation information extracting part (unit) 220 extracts the application activation information from the TS inputted from the broadcast receiving unit 21. Here, the application activation information is data containing information for specifying an application, such as an identifier (ID) of the application and a location (address) of the application, and additional information for controlling the application. The application activation information can be composed of a descriptor (application activation information descriptor) described in binary format as shown in FIG. 2A.

The information for specifying an application has the following information. For example, an application name is described in lines (5) to (8) in FIG. 2A. Further, an organization creating the application is described in line (9), and a number identifying the application which is uniquely determined in the organization is described in line (10). The number shown in lines (9) and (10) is the application ID which uniquely identifies the application. Further, the location (address) of the application is described in lines (20) to (23). Furthermore, in addition to these, as shown in lines (32) to (34), the additional information used by the application, for example, the location (address) of metadata, image data, or the like may be described. In this manner, it is possible to suppress a data volume to be added to an EIT (Event Information Table) by describing references of the additional data.

Further, the additional information for controlling the application has the following information. For example, in FIG. 2A, a control code (application control code) for controlling an application state is described in line (11). The application control code has, for example, a value shown in FIG. 2B.

The application control codes are basically the same as those specified in ARIB STD-B23. For example, "AUTOSTART" indicates an application which is automatically activated without user's operation in the integrated broadcasting communications receiver 2. Further, "PRESENT" indicates an application which is not automatically activated. Further, "DESTROY" and "KILL" are the control codes instructing ends of the applications, and indicate a normal end (for example, end with user's confirmation) or a forced end (for example, end without user's confirmation). Thus, the application control codes are basically the same as those specified in ARIB STD-B23, but here, "KILLALL" is further added. The "KILLALL" indicates the forced end of all applications currently activated, regardless of the applications associated with program channels in the integrated broadcasting communications receiver 2.

Here, the application activation information composed of the descriptor shown in FIG. 2A is described in a p/f region of the EIT (Event Information Table) in a SI (Service Information) table contained in the TS. That is, the integrated broadcasting communications receiver 2 according to the first embodiment is assumed that the application activation information is described in the EIT at a broadcast station side (broadcast transmitting apparatus 1) and transmitted to a receiver side (integrated broadcasting communications receiver 2). Incidentally, the EIT is a table in which program titles, program contents, performers, program genre, and the like are described, and the p/f region is a region in which the program (content) in the present broadcast and the program of next scheduled broadcast are described in the EIT.

In this manner, since the integrated broadcasting communications receiver 2 extracts the application activation information from the p/f region of the EIT, it is possible to obtain and control the applications used in the content in the present broadcast and the content of next scheduled broadcast. Thus, by the integrated broadcasting communications receiver 2, it is possible to obtain and control the applications used in the content in the present broadcast and the content of next scheduled broadcast, thereby performing the applications in association with the contents.

Specifically, as shown in FIG. 1, the application activation information extracting part 220 confirms whether or not the application activation information shown in FIG. 2A is described in the p/f region of the EIT contained in the TS inputted from the broadcast receiving unit 21, and extracts the content of the application activation information if the content is described. Further, as shown in FIG. 1, the application activation information extracting part 220 outputs the extracted contents as the application activation information to the application controlling unit 25.

The video/audio decoding unit 23 decodes the video/audio received and demodulated by the broadcast receiving unit 21. For example, if the video/audio is encoded by a MPEG-2 encoding scheme, the video/audio decoding unit 23 performs MPEG-2 decoding, and as shown in FIG. 1, outputs the video/audio to the composing and displaying unit 30 as video/audio data in a displayable output format.

The data broadcast decoding unit 24 decodes the data (data file) received and demodulated by the broadcast receiving unit 21. Here, a data file broadcasted as a data broadcast in Japan is described in BML, which is a markup language. Therefore, the data broadcast decoding unit 24 specifically functions as a BML analyzing unit for analyzing BML, and outputs data (data broadcast data) converted into a displayable output format from BML to the composing and displaying unit 30, as shown in FIG. 1.

The application controlling unit 25 controls an activation state of the application executed by the integrated broadcasting communications receiver 2. Specifically, as shown in FIG. 1, the application controlling unit 25 refers to an application ID described in the application activation information inputted from the application activation information extracting part 220 and the address of the application server 3 storing the application, and instructs the application obtaining unit 26 to obtain the application from the application server 3.

As shown in FIG. 1, when the application obtaining unit 26 obtains the target application from the application 3, the application controlling unit 25 refers to an application control code (see FIGS. 2A, 2B) described in the application activation information and instructs the application execution unit 29 to make the application into the activation state described in the application control code. In this manner, the application controlling unit 25 issues an instruction to obtain and control the application to be executed by the integrated broadcasting communications receiver 2, according to the content of the application activation information.

Note that, if the application with the application ID described in the application activation information inputted from the application activation information extracting part 220 is already stored in the application storing unit 28, the application controlling unit 25 instructs the application execution unit 29 to make the application into the application activation state described in the application control code, without instructing the application obtaining unit 26 to obtain the application from the application server 3.

The application obtaining unit 26 obtains the application associated with the content from the application server 3. Specifically, as shown in FIG. 1, according to the instruction from the application controlling unit 25, the application obtaining unit 26 obtains the application from the application server 3 via the communication line N and the communication transmitting and receiving unit 27 as communication interfaces. Note that, as described above, since the instruction from the application controlling unit 25 contains an application ID of an application as a control object and the address of the application server 3 storing the application, the application obtaining unit 26 is able to obtain a target application, according to the instruction from the application controlling unit 25.

As shown in FIG. 1, the application obtaining unit 26 obtains the application from the application server 3, and then outputs the application to the application storing unit 28. However, as shown in FIG. 1, when the integrated broadcasting communications receiver 2 executes the application on-the-fly without once storing the application, the application obtaining unit 26 can also output the application directly to the application executing unit 29.

Note that, it is assumed that a case in which the integrated broadcasting communications receiver 2 once stores an application and then executes the application is, for example, a case in which the obtained application is used in a news program that is broadcasted at the same time slot every day, that is, the case in which the same application is used many times. On the other hand, it is assumed that a case in which the integrated broadcasting communications receiver 2 executes the application on-the-fly is, for example, a case in which the obtained application is used in a program which is broadcasted only once, that is, the case in which the same application is used only once.

As shown in FIG. 1, the communication transmitting and receiving unit 27 performs data communication via the communication line N. The communication transmitting and receiving unit 27 performs transmission and reception of the data according to TCP/IP communication protocol.

The application storing unit 28 stores the applications. As shown in FIG. 1, the application storing unit 28 is configured to be inputted with the application obtained by the application obtaining unit 26, and be able to output the application to the application execution unit 29. Incidentally, the application storing unit 28 is specifically embodied as a memory, a hard disk, or the like that is capable of storing data.

The application executing unit 29 executes the applications. Specifically, as shown in FIG. 1, the application execution unit 29 executes the application obtained by the application obtaining unit 26, according to the instruction from the application controlling unit 25. Then, as shown in FIG. 1, the application execution unit 29 outputs drawing data and audio data (for example, data such as sound effects when executing the application) of the executed application to the composing and displaying unit 30.

The composing and displaying unit 30 is adapted to compose video/audio, data, and application. Specifically, as shown in FIG. 1, the composing and displaying unit 30 composes video/audio data which are inputted from the video/audio decoding unit 23, data broadcast data which is inputted from the data broadcast decoding unit 24, and drawing data and audio data which are inputted from the application execution unit 29, and respectively outputs them to a monitor Mo and a speaker Sp. Here, the composing and displaying unit 30 can be embodied as a general GDC (Graphic Display Controller).

The integrated broadcasting communications receiver 2 including a configuration described above is, by extracting the application activation information, by the application activation information extracting part 220, from the p/f region of the EIT contained in the TS transmitted from the broadcast transmitting apparatus 1, able to obtain the application as a control object from the application server 3 and control the application activation state. In other words, the integrated broadcasting communications receiver 2 is able to obtain the application activation information for obtaining and controlling the application via the broadcast wave W, and obtain the application via the communication line N.

As a result, the integrated broadcasting communications receiver 2 is able to reliably receive the application activation information transmitted from the broadcast transmitting apparatus 1 by using existing broadcast facilities, thereby reducing costs for receiving the application activation information.

### [Operation of First Embodiment]

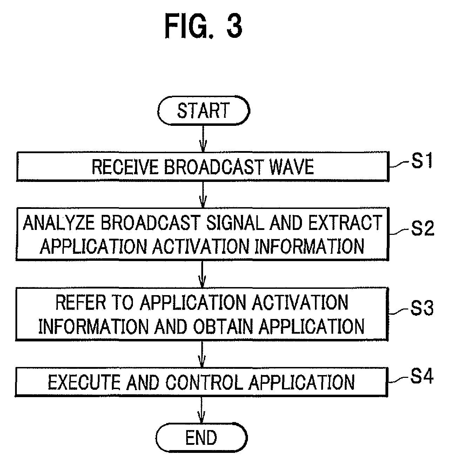

In the following, the operation of the integrated broadcasting communications receiver 2 according to the first embodiment of the present invention will be briefly described with reference to FIG. 3 (also with reference to FIG. 1 as appropriate). Note that, the following description will be focused on an application execution and processes related to the execution about the operation of the integrated broadcasting communications receiver 2, and the descriptions of the other processes will be omitted appropriately.

First, the integrated broadcasting communications receiver 2 receives the broadcast wave of the digital broadcast from the broadcast receiving unit 21 (Step S1), then extracts the application activation information from the p/f region of the EIT by the application activation information extracting part 220 (Step S2). Next, the integrated broadcasting communications receiver 2 refers to the application activation information by the application controlling unit 25, and obtains the application from the application server 3 by the application obtaining unit 26, according to an instruction from the application controlling unit 25 (Step S3). Next, the integrated broadcasting communications receiver 2 executes the application by the application executing unit 29, and controls the application activation state by the application controlling unit 25 (Step S4).

As described above, the integrated broadcasting communications receiver 2 is able to obtain and control the applications used in the content in the present broadcast and the content of next scheduled broadcast by extracting the application activation information from the p/f region of the EIT contained in the TS transmitted from the broadcast transmitting apparatus 1, thereby performing the applications in association with the contents.

### [Second Embodiment]

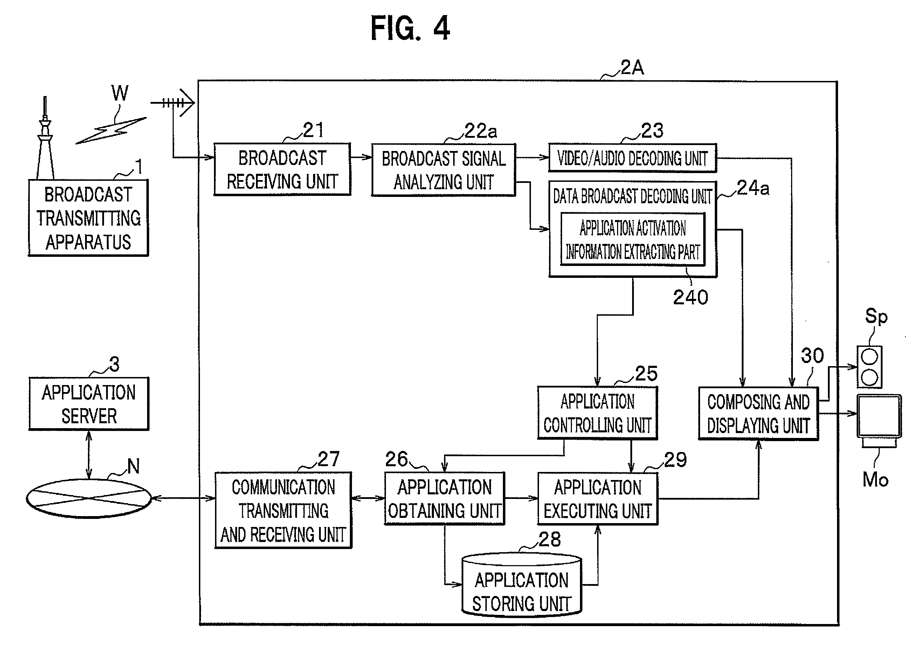

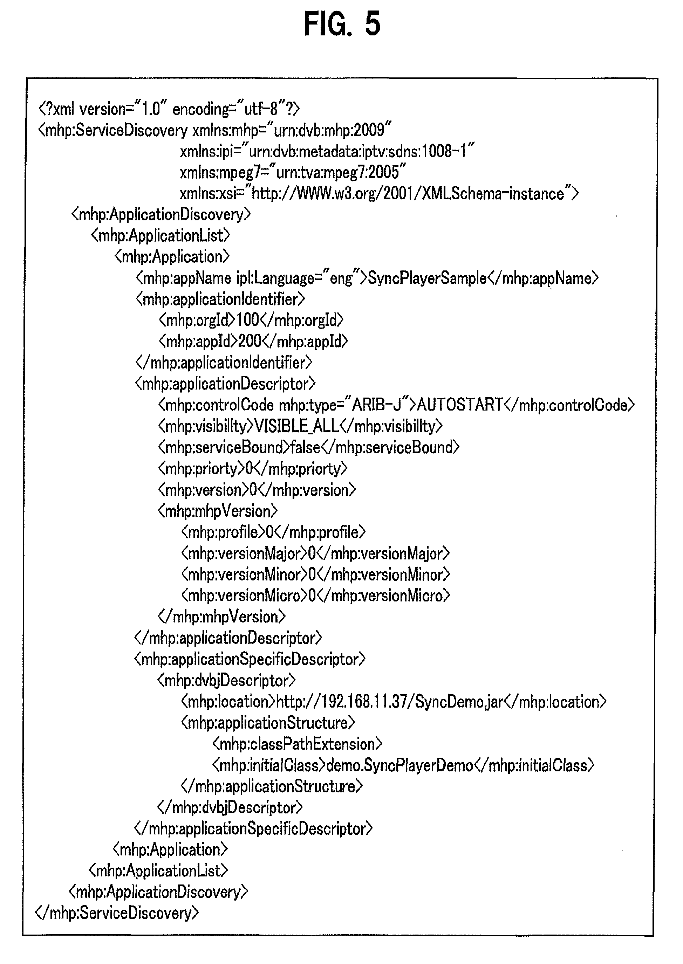

In the following, the integrated broadcasting communications receiver 2A according to the second embodiment will be briefly described with reference to FIGS. 4 and 5. As shown in FIG. 4, the integrated broadcasting communications receiver 2A has the same configuration as the integrated broadcasting communications receiver 2 according to the first embodiment except that a broadcast signal analyzing unit 22a is included instead of the broadcast signal analyzing unit 22, and a data broadcast decoding unit 24a is included instead of the data broadcast decoding unit 24. Therefore, the following description will be focused on differences from the integrated broadcasting communications receiver 2, and the detailed description on the configuration duplicated with the integrated broadcasting communications receiver 2 will be omitted.

The broadcast signal analyzing unit 22a analyzes the broadcast signals of the digital broadcast, and the basic functions thereof are the same as the above-described broadcast signal analyzing unit 22. However, as shown in FIG. 4, the broadcast signal analyzing unit 22a is different from the broadcast signal analyzing unit 22, and does not include the application activation information extracting part 220. Therefore, as shown in FIG. 4, the broadcast signal analyzing unit 22a does not extract the application activation information from the TS, but outputs the PES data separated from the TS to the video/audio decoding unit 23 and outputs the section data to the data broadcast decoding unit 24a.

The data broadcast decoding unit 24a decodes the data (data file) received and demodulated by the broadcast receiving unit 21, and the basic functions thereof are the same as the above-described data broadcast decoding unit 24. However, as shown in FIG. 4, the data broadcast decoding unit 24a is different from the data broadcast decoding unit 24, and includes an application activation information extracting part 240.

The application activation information extracting part (unit) 240 extracts the application activation information from data transmitted in a DSM-CC data carousel. Specifically, as shown in FIG. 4, the application activation information extracting part 240 extracts the application activation information file stored in a predetermined module of the DSM-CC data carousel, and outputs the application activation information file to the application controlling unit 25. In other words, in the integrated broadcasting communications receiver 2A according to the second embodiment, it is assumed that the broadcast station side (broadcast transmitting apparatus 1) transmits the application activation information file in the DSM-CC data carousel to the receiver side (integrated broadcasting communications receiver 2A). Incidentally, as shown in FIG. 5, the application activation information file means a file describing the content of the application activation information in a file format such as XML.

As described above, when the broadcast transmitting apparatus 1 transmits the application activation information file to the integrated broadcasting communications receiver 2A in the DSM-CC data carousel, the broadcast transmitting apparatus 1 transmits the application activation information file by fixing a module and a component tag of a transmitting carousel of the application activation information file. For example, the broadcast transmitting apparatus 1 fixes the both values such that the component tag is "AA" and the module ID is "0000", and transmits the broadcast data to the integrated broadcasting communications receiver 2A in the DSM-CC data carousel format. Thus, the application activation information extracting part 240 is able to extract easily and reliably the application activation information file from the DSM-CC data carousel based on the module ID and the component tag known in advance. Further, the application activation information extracting part 240 monitors the update of the module, and extracts again the application activation information file immediately after the module is updated. Thus, the integrated broadcasting communications receiver 2A is able to perform a specified control (life cycle control of the application) to be performed at any timing by the broadcast station (broadcast transmitting apparatus 1) side.

Note that, when the broadcast transmitting apparatus 1 transmits the application activation information file in the DSM-CC data carousel, a type descriptor for the application activation information may be transmitted in addition to a type descriptor identifying a type (file format) of the module in the DSM-CC data carousel. More specifically, the type descriptor is one of DII (Download Info Indication) items transmitted in the DSM-CC data carousel, and the item describing the file format transmitted as the module when one file is transmitted as one module. Thus, the integrated broadcasting communications receiver 2A is able to detect more reliably the data content (application activation information file) by referring to the DII in the DSM-CC data carousel.

The integrated broadcasting communications receiver 2A having the above configuration is, by extracting the application activation information file transmitted in the DSM-CC data carousel from the broadcast transmitting apparatus 1 by the application activation information extracting part 240, able to obtain the application as the control object from the application server 3 and control the application activation state. In other words, the integrated broadcasting communications receiver 2A is able to obtain the application activation information file for obtaining and controlling the application via the broadcast wave W, and obtain the application via the communication line N.

As a result, the integrated broadcasting communications receiver 2A is able to reliably receive the application activation information transmitted from the broadcast transmitting apparatus 1 by using the existing broadcast facilities, thereby reducing costs for receiving the application activation information.

### [Operation of Second Embodiment]

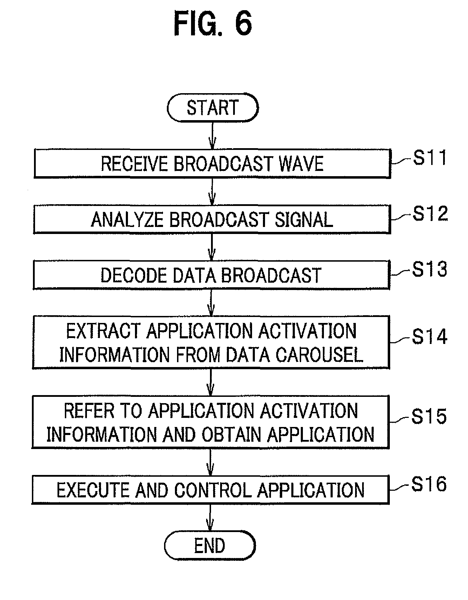

In the following, the operation of the integrated broadcasting communications receiver 2A according to the second embodiment of the present invention will be briefly described with reference to FIG. 6 (also with reference to FIG. 4 as appropriate). Note that, the following description will be focused on an application execution and processes related to the execution about the operation of the integrated broadcasting communications receiver 2A, and the descriptions of the other processes will be omitted appropriately.

First, the integrated broadcasting communications receiver 2A receives the broadcast wave of the digital broadcast by the broadcast receiving unit 21 (Step S11), then analyzes the broadcast signals by the broadcast signal analyzing unit 22a (Step S12). Next, the integrated broadcasting communications receiver 2A decodes the data broadcast by the data broadcast decoding unit 24a (Step S13), and extracts, by the application activation information extracting part 240, the application activation information file from the data transmitted in the DSM-CC data carousel (Step S 14).

Next, the integrated broadcasting communications receiver 2A refers to the application activation information by the application controlling unit 25, and obtains the application from the application server 3 by the application obtaining unit 26 according to the instruction from the application controlling unit 25 (Step S15). Next, the integrated broadcasting communications receiver 2A executes the application by the application executing unit 29, and controls the application activation state by the application controlling unit 25 (Step S16).

As described above, the integrated broadcasting communications receiver 2A is able to obtain and control the application used in the content in the present broadcast by extracting the application activation information file transmitted in the DSM-CC data carousel from the broadcast transmitting apparatus 1, thereby performing the application in association with the content.

### [Third Embodiment]

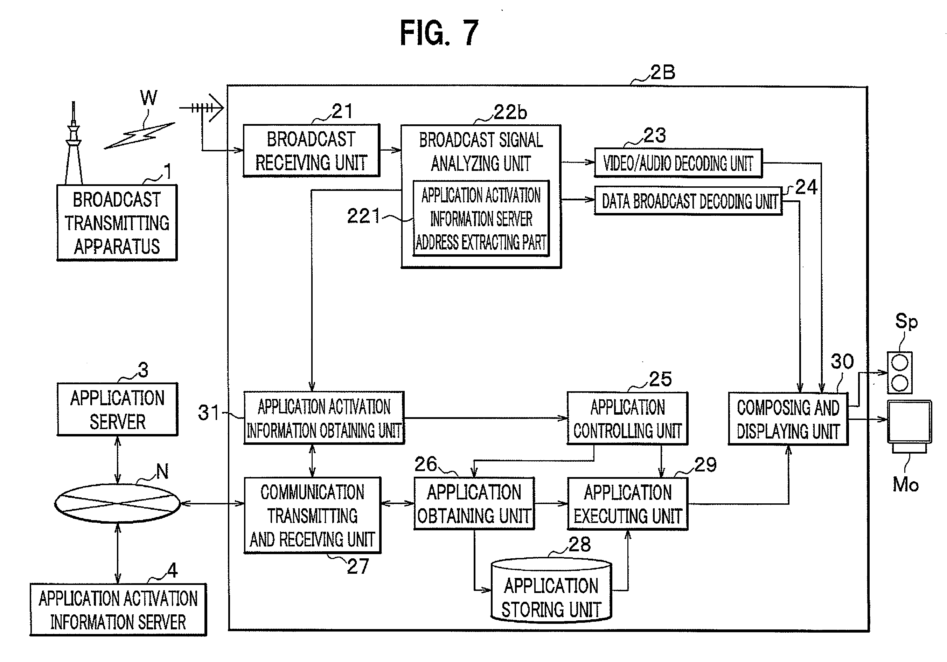

In the following, the integrated broadcasting communications receiver 2B according to the third embodiment will be briefly described with reference to FIG. 7. As shown in FIG. 7, the integrated broadcasting communications receiver 2B has the same configuration as the integrated broadcasting communications receiver 2 according to the first embodiment except that a broadcast signal analyzing unit 22b is included instead of the broadcast signal analyzing unit 22, and an application activation information obtaining unit 31 is further included. Therefore, the following description will be focused on differences from the integrated broadcasting communications receiver 2, and the detailed description on the configuration duplicated with the integrated broadcasting communications receiver 2 will be omitted.

The broadcast signal analyzing unit 22b analyzes the broadcast signals of the digital broadcast, and the basic functions thereof are the same as the above-described broadcast signal analyzing unit 22. However, as shown in FIG. 7, the broadcast signal analyzing unit 22b is different from the broadcast signal analyzing unit 22, and includes an application activation information server address extracting part 221.

The application activation information server address extracting part (unit) 221 extracts an address of an application activation information server 4 from the TS inputted from the broadcast receiving unit 21. Here, the application activation information server 4 is a server which previously stores the application activation information for controlling the activation state of the applications associated with the contents and transmits the application activation information via the communication line N to the integrated broadcasting communications receiver 2B. Here, the address of the application activation information server 4 is described in the p/f region of the EIT in the SI table contained in the TS. That is, it is assumed that the integrated broadcasting communications receiver 2B according to the third embodiment describes the address of the application activation information server 4 in the EIT at the broadcast station side (broadcast transmitting apparatus 1), and transmits this to the receiver side (integrated broadcasting communications receiver 2B).

In this manner, since the integrated broadcasting communications receiver 2B extracts the address of the application activation information server 4 from the p/f region of the Event Information Table, it is possible to obtain and control the applications used in the content in the present broadcast and the content of next scheduled broadcast. Thus, the integrated broadcasting communications receiver 2B is able to perform the applications in association with the contents.

Specifically, as shown in FIG. 7, the application activation information server address extracting part (unit) 221 confirms whether or not the address of the application activation information server 4 is described in the p/f region of the EIT contained in the TS inputted from the broadcast receiving unit 21, and extracts the address of the application activation information server 4 if the address is described. Then, as shown in FIG. 7, the application activation information server address extracting part 221 outputs the extracted address to the application activation information obtaining unit 31.

The application activation information obtaining unit 31 obtains the application activation information for controlling the application from the application activation information server 4. Specifically, as shown in FIG. 7, according to the address inputted from the application activation information server address extracting part 221, the application activation information obtaining unit 31 obtains the application activation information from the application activation information server 4 via the communication line N and the communication transmitting and receiving unit 27 as the communication interfaces. Further, as shown in FIG. 7, the application activation information obtaining unit 31 outputs the obtained application activation information to the application controlling unit 25.

The integrated broadcasting communications receiver 2B having the above configuration is, by extracting the address of the application activation information from the p/f region of the EIT contained in the TS transmitted from the broadcast transmitting apparatus 1 by the application activation information extracting part 220, able to obtain the application activation information from the application activation information server 4. Then, according to the application activation information, the integrated broadcasting communications receiver 2B is able to obtain the application as the control object from the application server 3 and control the application activation state. In other words, the integrated broadcasting communications receiver 2B is able to obtain the address of the application activation information server 4 storing the application activation information for obtaining and controlling the application via the broadcast wave W, and obtain the application via the communication line N.

As a result, since the application activation information can be transmitted by using the existing broadcast facilities from the broadcast transmitting apparatus 1, the integrated broadcasting communications receiver 2B is able to reliably receive the application activation information and reduce costs for receiving the application activation information. Further, by arranging the integrated broadcasting communications receiver 2B at the receiver side of the digital broadcast, it is possible to save bandwidth during the digital broadcast transmission because it is sufficient to transmit only the address of the application activation information from the broadcast station side (broadcast transmitting apparatus 1).

### [Operation of Third Embodiment]

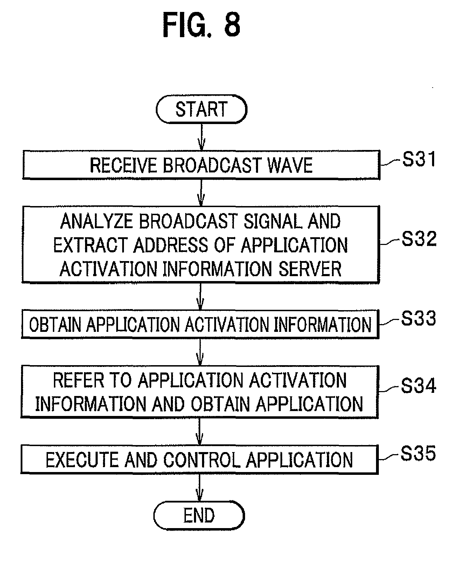

In the following, the operation of the integrated broadcasting communications receiver 2B according to the third embodiment will be briefly described with reference to FIG. 8 (also with reference to FIG. 7 as appropriate). Note that, the following description will be focused on an application execution and processes related to the execution about the operation of the integrated broadcasting communications receiver 2B, and the descriptions of the other processes will be omitted appropriately.

First, the integrated broadcasting communications receiver 2B receives the broadcast wave of the digital broadcast by the broadcast receiving unit 21 (Step S31), then extracts the address of the application activation information server 4 by the application activation information server address extracting part 221 (Step S32). Next, the integrated broadcasting communications receiver 2B obtains the application activation information from the application activation information server 4 according to the above-described address by the application activation information obtaining unit 31 (Step S33).

Next, the integrated broadcasting communications receiver 2B refers to the application activation information by the application controlling unit 25, and obtains the application from the application server 3 by the application obtaining unit 26 according to the instruction from the application controlling unit 25 (Step S34). Next, the integrated broadcasting communications receiver 2B executes the application by the application executing unit 29, and controls the application activation state by the application controlling unit 25 (Step S35).

As described above, the integrated broadcasting communications receiver 2B is able to obtain and control the applications used in the content in the present broadcast and the content of next scheduled broadcast by extracting the address of the application activation information from the p/f region of the EIT contained in the TS transmitted from the broadcast transmitting apparatus 1, thereby executing the applications in association with the contents.

### [Fourth Embodiment]

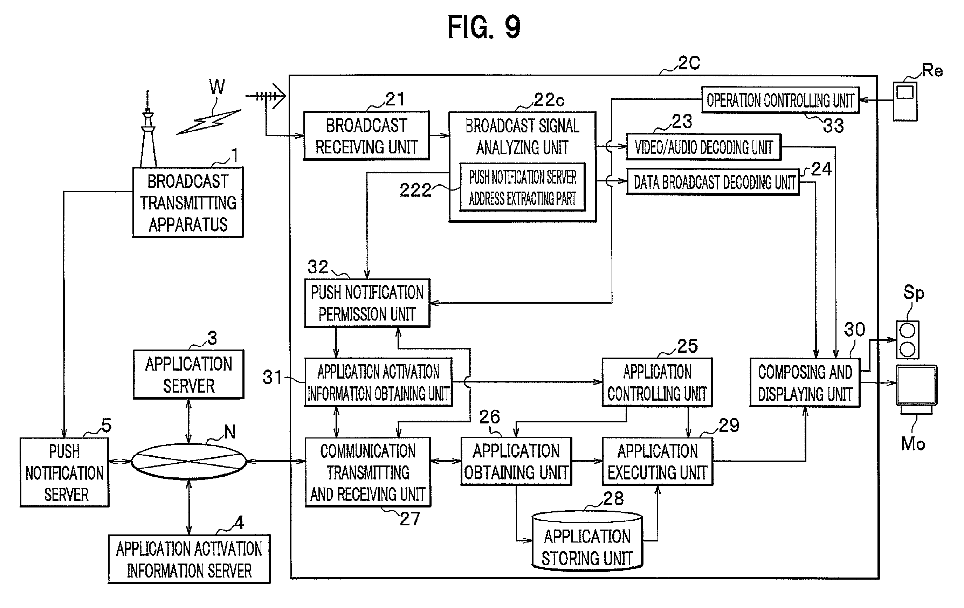

In the following, the integrated broadcasting communications receiver 2C according to the fourth embodiment will be briefly described with reference to FIG. 9. As shown in FIG. 9, the integrated broadcasting communications receiver 2C has the same configuration as the integrated broadcasting communications receiver 2 according to the first embodiment except that a broadcast signal analyzing unit 22c is included instead of the broadcast signal analyzing unit 22, and a push notification permission unit 32 and an operation controlling unit 33 are further included. Therefore, the following description will be focused on differences from the integrated broadcasting communications receiver 2, and the detailed description on the configuration duplicated with the integrated broadcasting communications receiver 2 will be omitted.

The broadcast signal analyzing unit 22c analyzes the broadcast signals of the digital broadcast, and the basic functions thereof are the same as the above-described broadcast signal analyzing unit 22. However, as shown in FIG. 9, the broadcast signal analyzing unit 22c is different from the broadcast signal analyzing unit 22, and includes a push notification server address extracting part 222.

The push notification server address extracting part (unit) 222 extracts an address of a push notification server 5 from the TS inputted from the broadcast receiving unit 21. Here, the push notification server 5 is, as shown in FIG. 9, a server which performs a push notification to the integrated broadcasting communications receiver 2C according to the instruction from the broadcast transmitting apparatus 1, i.e., the broadcast station. Here, the address of the push notification server 5 is described in the p/f region of the EIT in the SI table contained in the TS. That is, it is assumed that the integrated broadcasting communications receiver 2C according to the fourth embodiment describes the address of the push notification server 5 in the EIT at the broadcast station side (broadcast transmitting apparatus 1), and transmits this to the receiver side (integrated broadcasting communications receiver 2C).

Note that, the push notification is information notified by the broadcast transmitting apparatus 1 in order to control the activation state of the application executed by the integrated broadcasting communications receiver 2C at an arbitrary timing from the broadcast station side (broadcast transmitting apparatus 1) of the digital broadcast. This push notification, for example, contains the address of the application activation information server 4 storing the application activation information.

Specifically, as shown in FIG. 9, the push notification server address extracting part 222 confirms whether or not the address of the push notification server 5 is described in the p/f region of the EIT contained in the TS inputted from the broadcast receiving unit 21, and extracts the address of the push notification server 5 if the address is described. Then, as shown in FIG. 9, the push notification server address extracting part 222 outputs the extracted address to the push notification permission unit 32.

The push notification permission unit 32 permits the push notification to the push notification server 5. Specifically, as shown in FIG. 9, the push notification permission unit 32 is inputted with the address of the push notification server 5 from the above-described push notification server address extracting part 222. Further, as shown in FIG. 9, the push notification permission unit 32 is inputted with an instruction of permitting the push notification from the user via the operation controlling unit 33.

When the push notification permission unit 32 is inputted with the address of the push notification server 5 and the instruction of permitting the push notification, the push notification permission unit 32 notifies the push notification server 5 that the push notification is permitted. Thus, the push notification permission unit 32 is able to receive the push notification performed via the push notification server 5 by the broadcast station side (broadcast transmitting apparatus 1). As shown in FIG. 9, the push notification permission unit 32 outputs the address of the application activation information server 4, which is contained in the push notification received from the push notification server 5, to the application activation information obtaining unit 31.

The operation controlling unit 33 notifies the integrated broadcasting communications receiver 2C of an instruction associated with an input content of a remote controller Re operated by the user. Here, as shown in FIG. 9, the operation controlling unit 33 notifies the push notification permission unit 32 of the instruction of permission or non-permission for the push notification performed through the operation of the remote controller Re by the user. Incidentally, the above-described instruction of permission for the push notification by the user, for example, assumes a state in which if two options of "turn ON push notification" and "turn OFF push notification" are displayed on the monitor Mo when the user watches a content by the integrated broadcasting communications receiver 2C, the user selects the option of "turn ON push notification" by the remote controller Re.

The integrated broadcasting communications receiver 2C having the above configuration is, by extracting the address of the push notification server 5 from the p/f region of the EIT contained in the TS transmitted from the broadcast transmitting apparatus 1 by the push notification server address extracting part 222, able to receive the push notification from the push notification server 5 and obtain the application activation information from the application activation information server 4 according to the push notification. Then, according to the application activation information, the integrated broadcasting communications receiver 2C is able to obtain the application as the control object from the application server 3 and control the application activation state. In other words, the integrated broadcasting communications receiver 2C is able to obtain the address of the push notification server 5 via the broadcast wave W, and receive the push notification which is performed at an arbitrary timing by the broadcast station side (broadcast transmitting apparatus 1) by permitting the push notification to the push notification server 5.

As a result, since the application activation information can be transmitted by using the existing broadcast facilities from the broadcast transmitting apparatus 1, the integrated broadcasting communications receiver 2C is able to reliably receive the application activation information and reduce costs for receiving the application activation information. Further, the integrated broadcasting communications receiver 2C is able to obtain and control the application at the arbitrary timing determined by the broadcast station side (broadcast transmitting apparatus 1).

### [Operation of Fourth Embodiment]

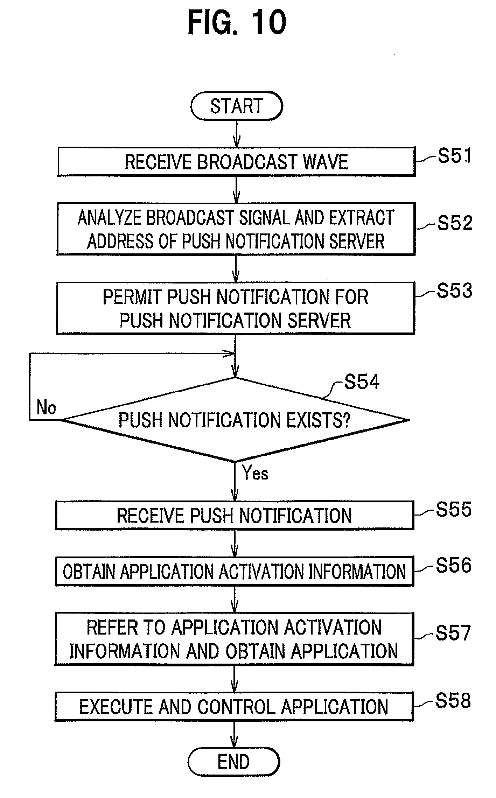

In the following, the operation of the integrated broadcasting communications receiver 2C according to the fourth embodiment will be briefly described with reference to FIG. 10 (also with reference to FIG. 9 as appropriate). Note that, the following description will be focused on an application execution and processes related to the execution about the operation of the integrated broadcasting communications receiver 2C, and the descriptions of the other processes will be omitted appropriately.

First, the integrated broadcasting communications receiver 2C receives the broadcast wave of the digital broadcast by the broadcast receiving unit 21 (Step S51), then extracts the address of the push notification server 5 by the push notification server address extracting part 222 (Step S52). Next, the integrated broadcasting communications receiver 2C is inputted with the instruction that the push notification is permitted from the user via the operation controlling unit 33, then notifies the push notification server 5 by the push notification permission unit 32 that the push notification is permitted (Step S53).

Next, the integrated broadcasting communications receiver 2C confirms whether or not the push notification exists to the push notification server 5 by the push notification permission unit 32 (Step S54), and receives this (Step S55) if the push notification exists ("Yes" in Step S54). On the other hand, the integrated broadcasting communications receiver 2C waits there until the push notification is performed, if the push notification does not exist ("No" in Step S54). Next, the integrated broadcasting communications receiver 2C obtains the application activation information from the application activation information server 4 by the application activation information obtaining unit 31 according to the push notification (Step S56).

Next, the integrated broadcasting communications receiver 2C refers to the application activation information by the application controlling unit 25, and obtains the application from the application server 3 by the application obtaining unit 26 according to the instruction from the application controlling unit 25 (Step S57). Next, the integrated broadcasting communications receiver 2C executes the application by the application executing unit 29, and controls the application activation state by the application controlling unit 25 (Step S58).

As described above, the integrated broadcasting communications receiver 2C is able to extract the address of the push notification server 5 from the p/f region of the EIT contained in the TS transmitted from the broadcast transmitting apparatus 1, and receive the push notification performed at the arbitrary timing by the broadcast station side (broadcast transmitting apparatus 1) by permitting the push notification to the push notification server 5. Therefore, the integrated broadcasting communications receiver 2C is able to obtain and control the application at the arbitrary timing determined by the broadcast station side (broadcast transmitting apparatus 1).

### [Fifth Embodiment]

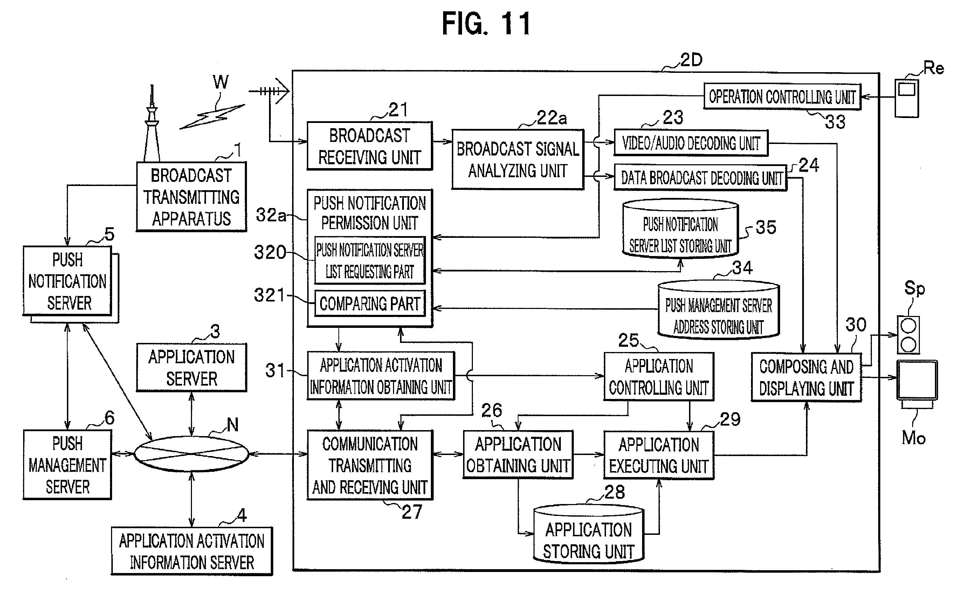

In the following, the integrated broadcasting communications receiver 2D according to the fifth embodiment will be briefly described with reference to FIG. 11. As shown in FIG. 11, the integrated broadcasting communications receiver 2D has the same configuration as the integrated broadcasting communications receiver 2C according to the fourth embodiment except that the broadcast signal analyzing unit 22a is included instead of the broadcast signal analyzing unit 22c, a push notification permission unit 32a is included instead of the push notification permission unit 32, and a push management server address storing unit 34 and a push notification server list storing unit 35 are further included. Further, the broadcast signal analyzing unit 22a is the same as the integrated broadcasting communications receiver 2A according to the second embodiment. Therefore, the following description will be focused on differences from the integrated broadcasting communications receivers 2A, 2C, and the detailed description on the configuration duplicated with the integrated broadcasting communications receivers 2A, 2C will be omitted.

The push notification permission unit 32a permits the push notification server 5 to perform the push notification, and the basic functions thereof are the same as the above-described push notification permission unit 32. However, as shown in FIG. 11, the push notification permission unit 32a is different from the push notification permission unit 32, and includes a push notification server list requesting part 320 and a comparing part 321.

The push notification server list requesting part (unit) 320 requests a list of push notification servers 5 performing the push notification from a push management server 6. Here, as shown in FIG. 11, the push management server 6 manages the number of the push notification servers 5 and each address thereof. Note that, the number of the push notification servers 5 managed by the push management server 6 may be single or plural. Further, the list of the push notification server means, for example, a list (for example, "http:// --- (So-and-so TV)") of addresses of the push notification servers 5 having performed the push notification respectively associated with names of the broadcast stations having performed the instruction of the push notification to the push notification servers 5.

Specifically, as shown in FIG. 11, the push notification server list requesting part 320 is inputted with the instruction that the push notification is permitted from the user via the operation controlling unit 33. Then, the push notification server list requesting part 320 obtains the address of the push management server 6 stored in advance in the push management server address storing unit 34, and requests the list of the push notification servers 5 from the push management server 6. Further, as shown in FIG. 11, the push notification server list requesting part 320 outputs the list of the push notification servers 5 to the push notification server list storing unit 35.

The comparing part (unit) 321 compares the list of the push notification servers 5 and the channel information of the content currently being viewed by the user. Specifically, as shown in FIG. 11, the comparing part 321 is inputted with the channel information of the content being viewed by the user via the operation controlling unit 33. Then, the comparing part 321 obtains the list of the push notification servers 5 from the push notification server list storing unit 35, and compares the broadcast station names described in the list and the broadcast station name contained in the channel information. Incidentally, when the user selects a channel by the remote controller Re, the channel information of the content being viewed by the user means, for example, information (for example, channel 1 (So-and-so TV)) on the broadcast station name and the channel inputted to the operation controlling unit 33 from the remote controller Re.

If the name of the broadcast station presenting the content currently being viewed by the user is included in the broadcast station names described in the list of the push notification servers 5, the comparing part 321 performs the notification to the push notification server 5 that the push notification is permitted. As shown in FIG. 11, the comparing part 321 receives the push notification from the push notification server 5, then outputs the address of the application activation information server 4 contained in the push notification to the application activation information obtaining unit 31.

The push management server address storing unit 34 stores the address of the push management server 6. As shown in FIG. 11, the push management server address storing unit 34 is configured to be previously inputted with the address of the push management server 6, and output the address to the push notification server list requesting part 320. Incidentally, the push management server address storing unit 34 is specifically embodied as the memory, the hard disk, or the like that is capable of storing data.

The push notification server list storing unit 35 stores the list of the push notification servers 5. As shown in FIG. 11, the push notification server list storing unit 35 is configured to be inputted with the list of the push notification servers 5 obtained by the push notification server list requesting part 320, and output the list to the comparing part 321. Incidentally, the push notification server list storing unit 35 is specifically embodied as the memory, the hard disk, or the like that is capable of storing data.

The integrated broadcasting communications receiver 2D having the above configuration obtains the list of the push notification servers 5 performing the push notification by the push notification server list requesting part 320, and compares, by the comparing part 321, the list of the push notification servers 5 and the channel information of the content currently being viewed by the user. If the name of the broadcast station delivering the content currently being viewed by the user is included in the list of the push notification servers 5, the integrated broadcasting communications receiver 2D is able to receive the push notification from the push notification server 5, and obtain the application activation information from the application activation information server 4 according to the push notification. Further, the integrated broadcasting communications receiver 2D is able to obtain the application as the control object from the application server 3 according to the application activation information, and control the application activation state. In other words, when a broadcast station described in the list of the push notification servers 5 matches the broadcast station providing the content currently being viewed, the integrated broadcasting communications receiver 2D is able to receive the push notification which is performed at an arbitrary timing by the broadcast station side (broadcast transmitting apparatus 1), by permitting the push notification server 5 to perform the push notification.

As a result, since the application activation information can be transmitted by using the existing broadcast facilities from the broadcast transmitting apparatus 1, the integrated broadcasting communications receiver 2D is able to reliably receive the application activation information and reduce costs for receiving the application activation information. Further, the integrated broadcasting communications receiver 2D is able to obtain and control the application at the arbitrary timing determined by the broadcast station side (broadcast transmitting apparatus 1).

### [Operation of Fifth Embodiment]

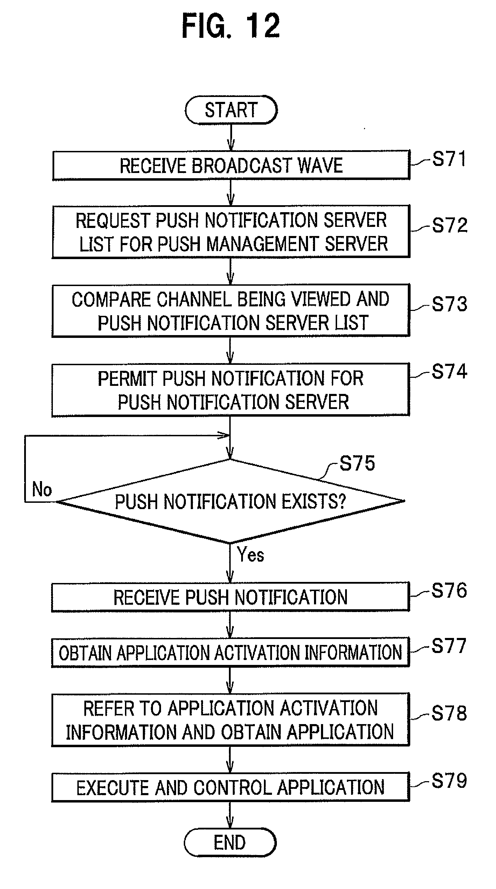

In the following, the operation of the integrated broadcasting communications receiver 2D according to the fifth embodiment will be briefly described with reference to FIG. 12 (also with reference to FIG. 11 as appropriate). Note that, the following description will be focused on an application execution and processes related to the execution about the operation of the integrated broadcasting communications receiver 2D, and the descriptions of the other processes will be omitted appropriately.

First, the integrated broadcasting communications receiver 2D receives the broadcast wave of the digital broadcast by the broadcast receiving unit 21 (Step S71). Next, the integrated broadcasting communications receiver 2D is inputted with the instruction that the push notification is permitted, from the user via the operation controlling unit 33, and then requests the list of the push notification server 5 from the push management server 6 by the push notification server list requesting part 320 (Step S72). Next, the integrated broadcasting communications receiver 2D is inputted the channel information of the content being viewed by the user via the operation controlling unit 33, and then compares the channel (information) being viewed and the list of the push notification servers 5 by the comparing part 321 (Step S73). Then, if the name of the broadcast station delivering the content currently being viewed by the user is included in the list of the push notification servers 5, the integrated broadcasting communications receiver 2D notifies the push notification server 5 performing the push notification by the broadcast station, that the push notification is permitted, by the push notification permission unit 32a (Step S74).

Next, the integrated broadcasting communications receiver 2D confirms whether or not the push notification exists in the push notification server 5 by the comparing unit 321 (Step S75), and receives this (Step S76) if the push notification exists ("Yes" in Step S75). On the other hand, the integrated broadcasting communications receiver 2D waits there until the push notification is performed, if the push notification does not exist ("No" in Step S75). Next, the integrated broadcasting communications receiver 2D obtains the application activation information from the application activation information server 4 by the application activation information obtaining unit 31 according to the push notification (Step S77).

Next, the integrated broadcasting communications receiver 2D refers to the application activation information by the application controlling unit 25, and obtains the application from the application server 3 by the application obtaining unit 26 according to the instruction from the application controlling unit 25 (Step S78). Next, the integrated broadcasting communications receiver 2D executes the application by the application executing unit 29, and controls the application activation state by the application controlling unit 25 (Step S79).

As described above, the integrated broadcasting communications receiver 2D is able to obtain the list of the push notification servers 5 performing the push notification, and receive the push notification performed at the arbitrary timing by the broadcast station side (broadcast transmitting apparatus 1), by permitting the push notification based on a comparison result of the list of the push notification servers 5 with the channel information of the content currently being viewed by the user. Therefore, the integrated broadcasting communications receiver 2D is able to obtain and control the application at the arbitrary timing determined by the broadcast station side (broadcast transmitting apparatus 1).

### [Sixth Embodiment]

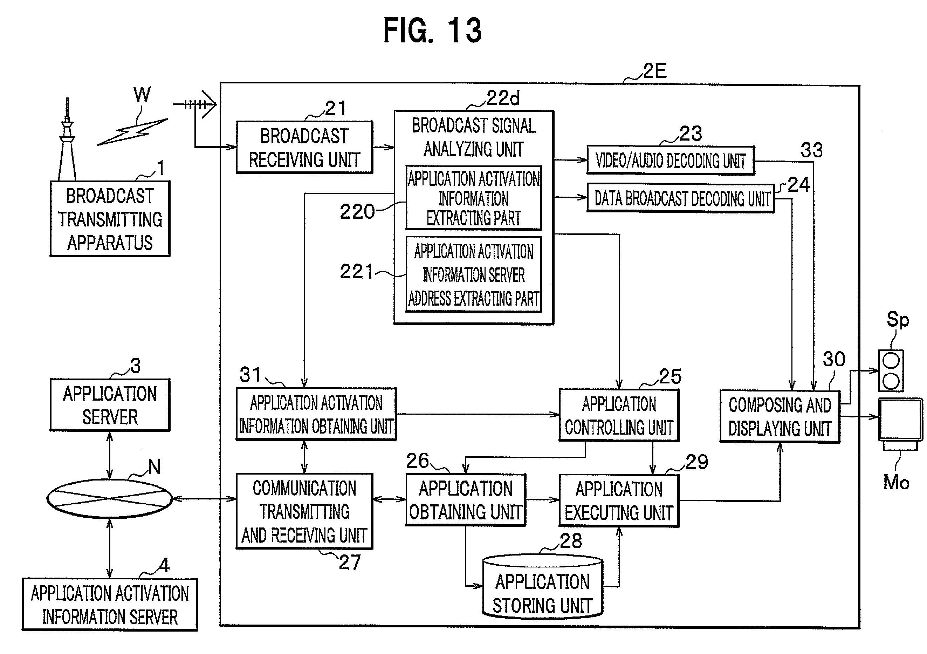

In the following, the integrated broadcasting communications receiver 2E according to the sixth embodiment will be briefly described with reference to FIG. 13. As shown in FIG. 13, the integrated broadcasting communications receiver 2E has the same configuration as the integrated broadcasting communications receiver 2B according to the third embodiment except that a broadcast signal analyzing unit 22d is included instead of the broadcast signal analyzing unit 22b. Therefore, the following description will be focused on differences from the integrated broadcasting communications receiver 2B, and the detailed description on the configuration duplicated with the integrated broadcasting communications receiver 2B will be omitted. Further, since the operation of the integrated broadcasting communications receiver 2E is also the same as the operation of the above-described integrated broadcasting communications receivers 2, 2B, the description thereof will be omitted here.

The broadcast signal analyzing unit 22d analyzes the TS of the digital broadcast, and the basic functions thereof are the same as the above-described broadcast signal analyzing unit 22. However, as shown in FIG. 13, the broadcast signal analyzing unit 22d is different from the broadcast signal analyzing unit 22, and includes the application activation information extracting part 220 and the application activation information server address extracting part 221.

The integrated broadcasting communications receiver 2E is, by including the application activation information extracting part 220, able to extract the application activation information described in the p/f region of the EIT in the SI table contained in the TS of the digital broadcast. Further, the integrated broadcasting communications receiver 2E is, by including the application activation information server address extracting part 221, able to extract the address of the application activation information server 4 described in the p/f region of the EIT in the SI table contained in the TS of the digital broadcast, and obtain the application activation information from the application activation information server 4. In other words, the integrated broadcasting communications receiver 2E is able to obtain the application activation information from both paths of the broadcast wave W and the communication line N.

As a result, since the integrated broadcasting communications receiver 2E is able to reliably receive the application activation information transmitted by using the existing broadcast facilities from the broadcast transmitting apparatus 1, it is possible to reduce costs for receiving the application activation information. Further, the integrated broadcasting communications receiver 2E is able to receive the application activation information even if the application activation information is provided in different ways respectively from a plurality of broadcast stations (a plurality of broadcast transmitting apparatuses 1).

### [Seventh Embodiment]

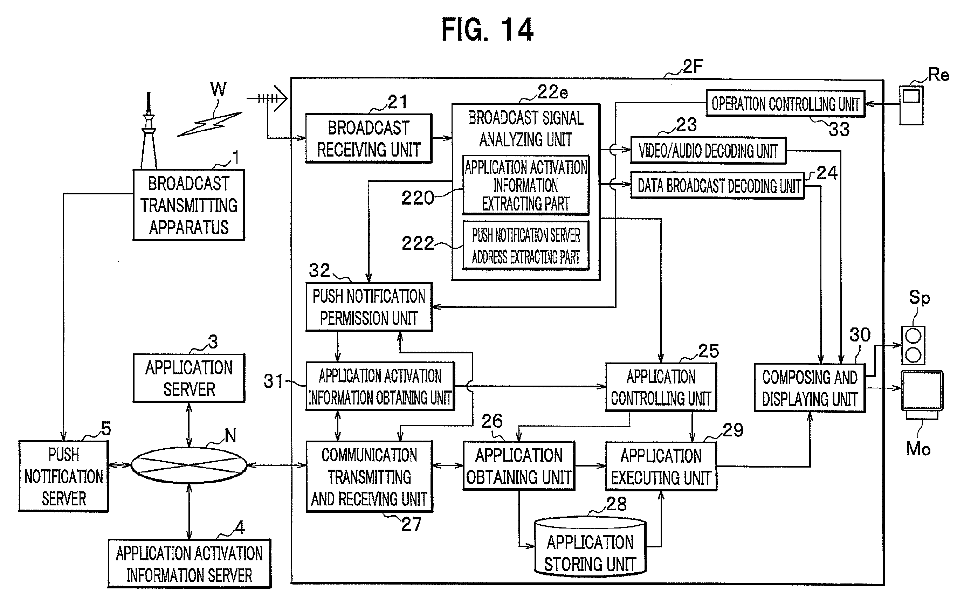

In the following, the integrated broadcasting communications receiver 2F according to the seventh embodiment will be briefly described with reference to FIG. 14. As shown in FIG. 14, the integrated broadcasting communications receiver 2F has the same configuration as the integrated broadcasting communications receiver 2C according to the fourth embodiment except that a broadcast signal analyzing unit 22e is included instead of the broadcast signal analyzing unit 22c. Therefore, the following description will be focused on differences from the integrated broadcasting communications receiver 2C, and the detailed description on the configuration duplicated with the integrated broadcasting communications receiver 2C will be omitted. Further, since the operation of the integrated broadcasting communications receiver 2F is also the same as the operation of the above-described integrated broadcasting communications receivers 2, 2C, the description thereof will be omitted here.

The broadcast signal analyzing unit 22e analyzes the TS of the digital broadcast, and the basic functions thereof are the same as the above-described broadcast signal analyzing unit 22. However, as shown in FIG. 14, the broadcast signal analyzing unit 22e is different from the broadcast signal analyzing unit 22, and includes the application activation information extracting part 220 and the push notification server address extracting part 222.

The integrated broadcasting communications receiver 2F is, by including the application activation information extracting part 220, able to extract the application activation information described in the p/f region of the EIT in the SI table contained in the TS of the digital broadcast. Further, the integrated broadcasting communications receiver 2F is, by including the push notification server address extracting part 222, able to extract the address of the push notification server 5 described in the p/f region of the EIT in the SI table contained in the TS of the digital broadcast, and obtain the application activation information according to the push notification from the push notification server 5. In other words, the integrated broadcasting communications receiver 2F is able to obtain the application activation information from the both paths of the broadcast wave W and the communication line N.

As a result, since the integrated broadcasting communications receiver 2F is able to reliably receive the application activation information transmitted by using the existing broadcast facilities from the broadcast transmitting apparatus 1, it is possible to reduce costs for receiving the application activation information. Further, the integrated broadcasting communications receiver 2F is able to receive the application activation information even if the application activation information is provided in different ways respectively from the plurality of broadcast stations (the plurality of broadcast transmitting apparatuses 1).

### [Eighth Embodiment]

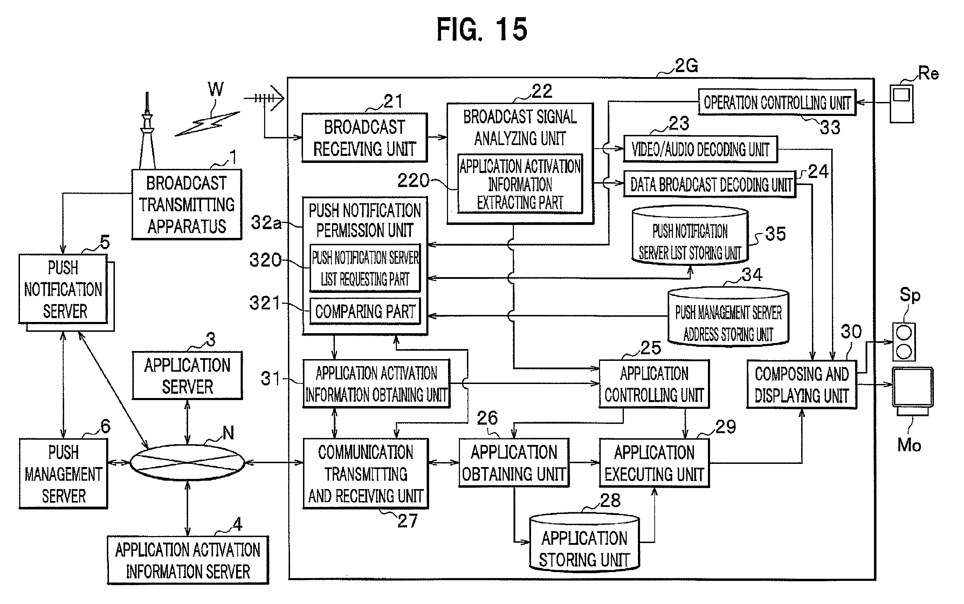

In the following, the integrated broadcasting communications receiver 2G according to the eighth embodiment will be briefly described with reference to FIG. 15. As shown in FIG. 15, the integrated broadcasting communications receiver 2G has the same configuration as the integrated broadcasting communications receiver 2D according to the fifth embodiment except that the broadcast signal analyzing unit 22 is included instead of the broadcast signal analyzing unit 22d. Further, the broadcast signal analyzing unit 22 is the same as that of the integrated broadcasting communications receiver 2 according to the first embodiment. Therefore, the following description will be focused on differences from the integrated broadcasting communications receivers 2, 2D, and the detailed description on the configuration duplicated with the integrated broadcasting communications receivers 2, 2D will be omitted. Further, since the operation of the integrated broadcasting communications receiver 2G is also the same as the operation of the above-described integrated broadcasting communications receivers 2, 2D, the description thereof will be omitted here.

The integrated broadcasting communications receiver 2G is, by including the application activation information extracting part 220, able to extract the application activation information described in the p/f region of the EIT in the SI table contained in the TS of the digital broadcast. Further, the integrated broadcasting communications receiver 2G is, by including the push notification permission unit 32a, able to obtain the application activation information according to the push notification from the push notification server 5. In other words, the integrated broadcasting communications receiver 2G is able to obtain the application activation information from the both paths of the broadcast wave W and the communication line N.

As a result, since the integrated broadcasting communications receiver 2G is able to reliably receive the application activation information transmitted by using the existing broadcast facilities from the broadcast transmitting apparatus 1, it is possible to reduce costs for receiving the application activation information. Further, the integrated broadcasting communications receiver 2G is able to receive the application activation information even if the application activation information is provided in different ways respectively from the plurality of broadcast stations (the plurality of broadcast transmitting apparatuses 1).

### [Ninth Embodiment]

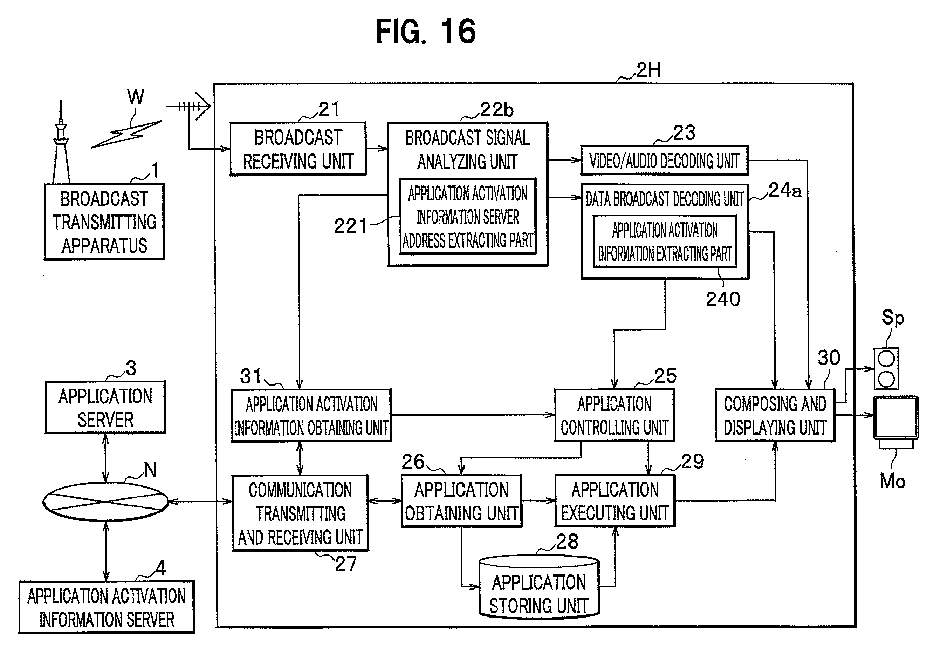

In the following, the integrated broadcasting communications receiver 2H according to the ninth embodiment will be briefly described with reference to FIG. 16. As shown in FIG. 16, the integrated broadcasting communications receiver 2H has the same configuration as the integrated broadcasting communications receiver 2B according to the third embodiment except that the data broadcast decoding unit 24a is included instead of the data broadcast decoding unit 24. Further, the data broadcast decoding unit 24a is the same as that of the integrated broadcasting communications receiver 2A according to the second embodiment. Therefore, the following description will be focused on differences from the integrated broadcasting communications receivers 2A, 2B, and the detailed description on the configuration duplicated with the integrated broadcasting communications receivers 2A, 2B will be omitted. Further, since the operation of the integrated broadcasting communications receiver 2H is also the same as the operation of the above-described integrated broadcasting communications receivers 2A, 2B, the description thereof will be omitted here.

The integrated broadcasting communications receiver 2H is, by including the application activation information server address extracting part 221, able to extract the address of the application activation information server 4 described in the p/f region of the EIT in the SI table contained in the TS of the digital broadcast, and obtain the application activation information from the application activation information server 4. Further, the integrated broadcasting communications receiver 2H is, by including the application activation information extracting part 240, able to extract the application activation information from the data transmitted in the DSM-CC data carousel. In other words, the integrated broadcasting communications receiver 2H is able to obtain the application activation information from the both paths of the broadcast wave W and the communication line N.

As a result, since the integrated broadcasting communications receiver 2H is able to reliably receive the application activation information transmitted by using the existing broadcast facilities from the broadcast transmitting apparatus 1, it is possible to reduce costs for receiving the application activation information. Further, the integrated broadcasting communications receiver 2H is able to receive the application activation information even if the application activation information is provided in different ways respectively from the plurality of broadcast stations (the plurality of broadcast transmitting apparatuses 1).

### [Tenth Embodiment]

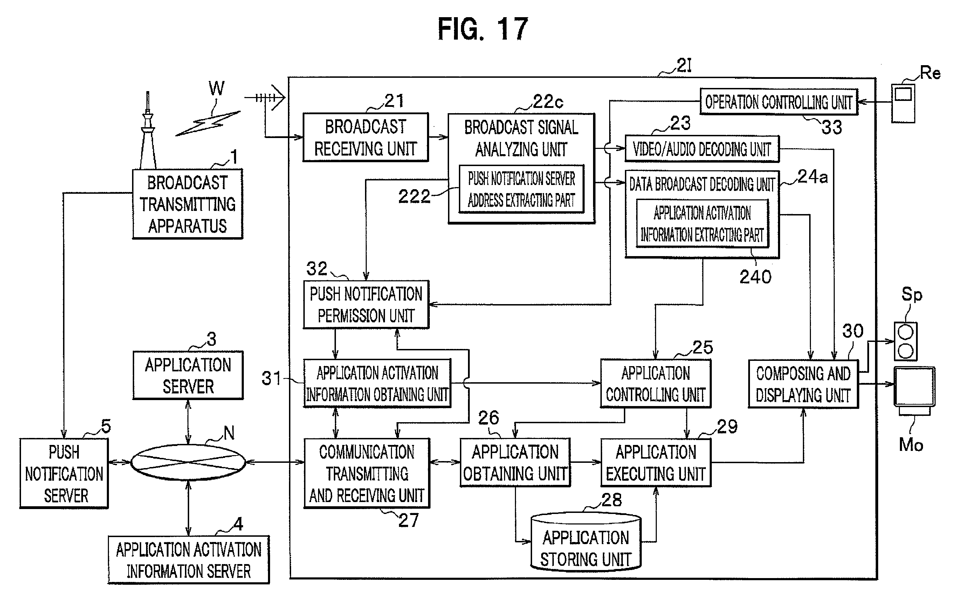

In the following, the integrated broadcasting communications receiver 2I according to the tenth embodiment will be briefly described with reference to FIG. 17. As shown in FIG. 17, the integrated broadcasting communications receiver 2I has the same configuration as the integrated broadcasting communications receiver 2C according to the fourth embodiment except that the data broadcast decoding unit 24a is included instead of the data broadcast decoding unit 24. Further, the data broadcast decoding unit 24a is the same as that of the integrated broadcasting communications receiver 2A according to the second embodiment. Therefore, the following description will be focused on differences from the integrated broadcasting communications receivers 2A, 2C, and the detailed description on the configuration duplicated with the integrated broadcasting communications receivers 2A, 2C will be omitted. Further, since the operation of the integrated broadcasting communications receiver 2I is also the same as the operation of the above-described integrated broadcasting communications receivers 2A, 2C, the description thereof will be omitted here.

The integrated broadcasting communications receiver 2I is, by including the push notification server address extracting part 222, able to extract the address of the push notification server 5 described in the p/f region of the EIT in the SI table contained in the TS of the digital broadcast, and obtain the application activation information according to the push notification from the push notification server 5. Further, the integrated broadcasting communications receiver 2I is, by including the application activation information extracting part 240, able to extract the application activation information from the data transmitted in the DSM-CC data carousel. In other words, the integrated broadcasting communications receiver 2I is able to obtain the application activation information from the both paths of the broadcast wave W and the communication line N.

As a result, since the integrated broadcasting communications receiver 2I is able to reliably receive the application activation information transmitted by using the existing broadcast facilities from the broadcast transmitting apparatus 1, it is possible to reduce costs for receiving the application activation information. Further, the integrated broadcasting communications receiver 2I is able to receive the application activation information even if the application activation information is provided in different ways respectively from the plurality of broadcast stations (the plurality of broadcast transmitting apparatuses 1).

### [Eleventh Embodiment]

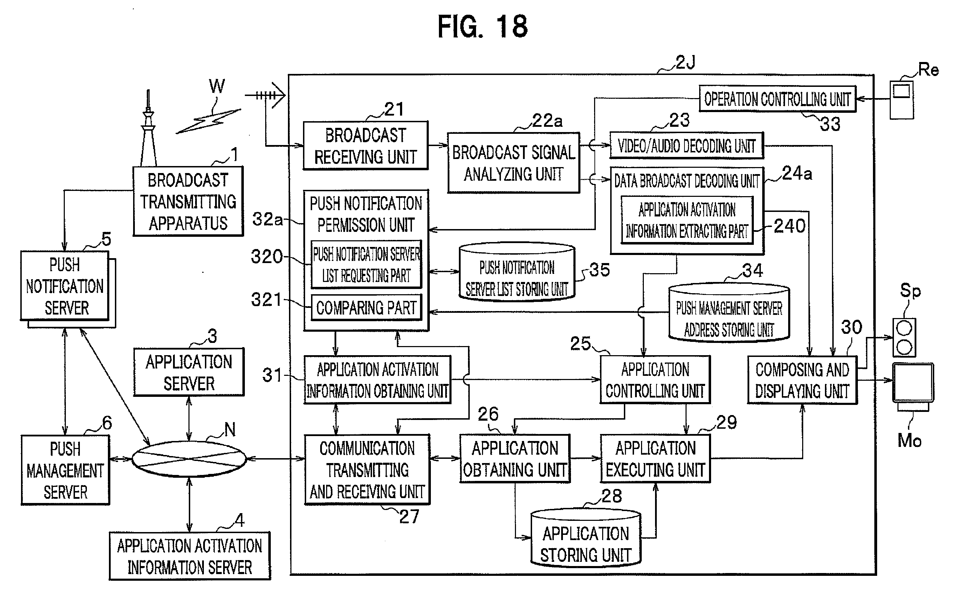

In the following, the integrated broadcasting communications receiver 2J according to the eleventh embodiment will be briefly described with reference to FIG. 18. As shown in FIG. 18, the integrated broadcasting communications receiver 2J has the same configuration as the integrated broadcasting communications receiver 2D according to the fifth embodiment except that the data broadcast decoding unit 24a is included instead of the data broadcast decoding unit 24. Further, the data broadcast decoding unit 24a is the same as that of the integrated broadcasting communications receiver 2A according to the second embodiment. Therefore, the following description will be focused on differences from the integrated broadcasting communications receivers 2A, 2D, and the detailed description on the configuration duplicated with the integrated broadcasting communications receivers 2A, 2D will be omitted. Further, since the operation of the integrated broadcasting communications receiver 2J is also the same as the operation of the above-described integrated broadcasting communications receivers 2A, 2D, the description thereof will be omitted here.

The integrated broadcasting communications receiver 2J is, by including the application activation information extracting part 240, able to extract the application activation information from the data transmitted in the DSM-CC data carousel. Further, the integrated broadcasting communications receiver 2J is, by including the push notification permission unit 32a, able to obtain the application activation information according to the push notification from the push notification server 5. In other words, the integrated broadcasting communications receiver 2J is able to obtain the application activation information from the both paths of the broadcast wave W and the communication line N.

As a result, since the integrated broadcasting communications receiver 2J is able to reliably receive the application activation information transmitted by using the existing broadcast facilities from the broadcast transmitting apparatus 1, it is possible to reduce costs for receiving the application activation information. Further, the integrated broadcasting communications receiver 2J is able to receive the application activation information even if the application activation information is provided in different ways respectively from the plurality of broadcast stations (the plurality of broadcast transmitting apparatuses 1).

### [Twelfth Embodiment]

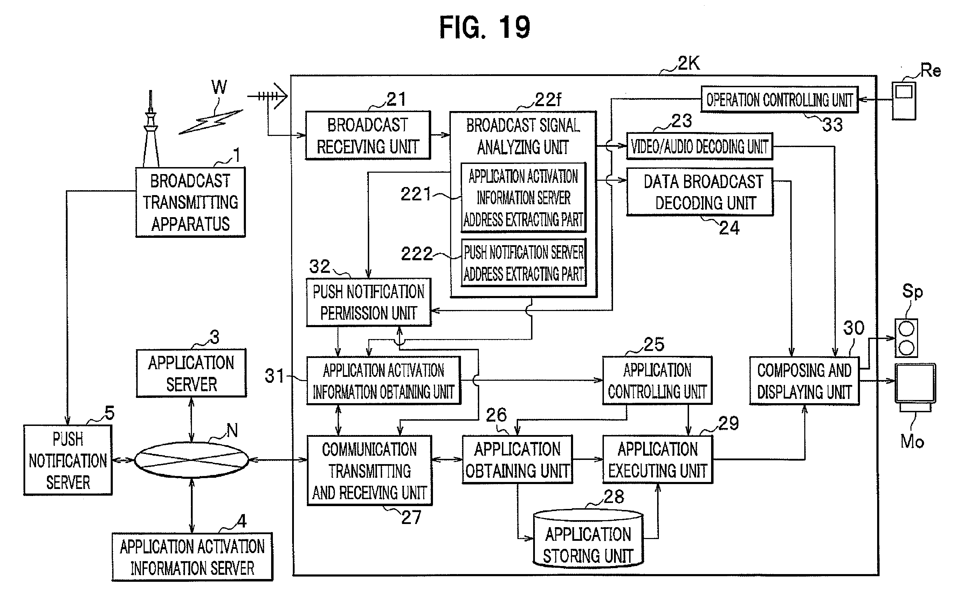

In the following, the integrated broadcasting communications receiver 2K according to the twelfth embodiment will be briefly described with reference to FIG. 19. As shown in FIG. 19, the integrated broadcasting communications receiver 2K has the same configuration as the integrated broadcasting communications receiver 2C according to the fourth embodiment except that a broadcast signal analyzing unit 22f is included instead of the broadcast signal analyzing unit 22c. Therefore, the following description will be focused on differences from the integrated broadcasting communications receiver 2C, and the detailed description on the configuration duplicated with the integrated broadcasting communications receiver 2C will be omitted. Further, since the operation of the integrated broadcasting communications receiver 2K is also the same as the operation of the above-described integrated broadcasting communications receivers 2B, 2C, the description thereof will be omitted here.

The broadcast signal analyzing unit 22f analyzes the TS of the digital broadcast, and the basic functions thereof are the same as the above-described broadcast signal analyzing unit 22. However, as shown in FIG. 19, the broadcast signal analyzing unit 22f is different from the broadcast signal analyzing unit 22, and includes the application activation information server address extracting part 221 and the push notification server address extracting part 222.

The integrated broadcasting communications receiver 2K is, by including the application activation information server address extracting part 221, able to extract the address of the application activation information server 4 described in the p/f region of the EIT in the SI table contained in the TS of the digital broadcast, and obtain the application activation information from the application activation information server 4. Further, the integrated broadcasting communications receiver 2K is, by including the push notification server address extracting part 222, able to extract the address of the push notification server 5 described in the p/f region of the EIT in the SI table contained in the TS of the digital broadcast, and obtain the application activation information according to the push notification from the push notification server 5.

As a result, since the integrated broadcasting communications receiver 2K is able to reliably receive the application activation information transmitted by using the existing broadcast facilities from the broadcast transmitting apparatus 1, it is possible to reduce costs for receiving the application activation information. Further, the integrated broadcasting communications receiver 2K is able to receive the application activation information even if the application activation information is provided in different ways respectively from the plurality of broadcast stations (the plurality of broadcast transmitting apparatuses 1).

### [Thirteenth Embodiment]

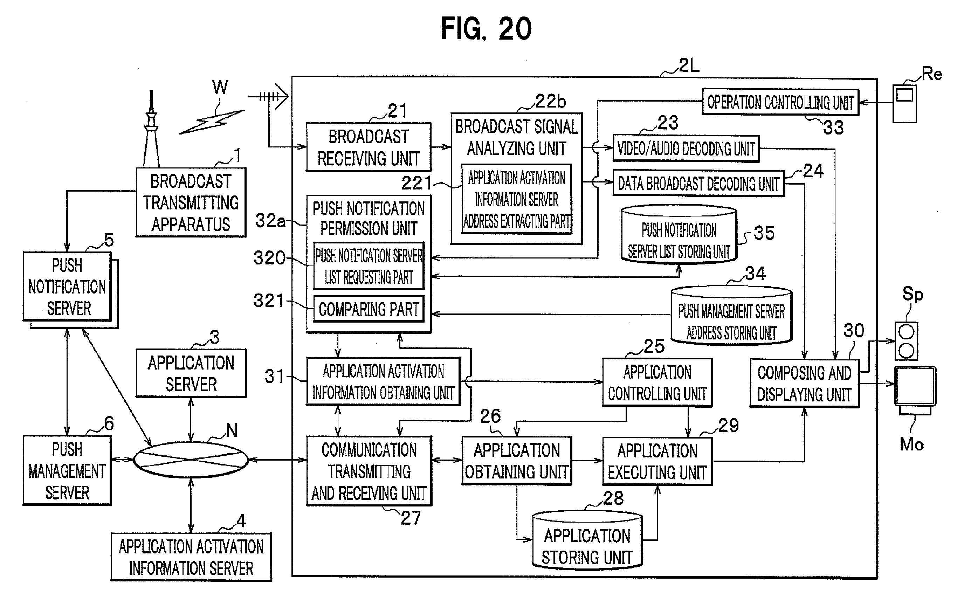

In the following, the integrated broadcasting communications receiver 2L according to the thirteenth embodiment will be briefly described with reference to FIG. 20. As shown in FIG. 20, the integrated broadcasting communications receiver 2L has the same configuration as the integrated broadcasting communications receiver 2D according to the fifth embodiment except that the broadcast signal analyzing unit 22b is included instead of the broadcast signal analyzing unit 22d. Further, the data broadcast decoding unit 24b is the same as that of the integrated broadcasting communications receiver 2B according to the second embodiment. Therefore, the following description will be focused on differences from the integrated broadcasting communications receivers 2B, 2D and the detailed description on the configuration duplicated with the integrated broadcasting communications receivers 2B, 2D will be omitted. Further, since the operation of the integrated broadcasting communications receiver 2L is also the same as the operation of the above-described integrated broadcasting communications receivers 2B, 2D, the description thereof will be omitted here.

The integrated broadcasting communications receiver 2L is, by including the application activation information server address extracting part 221, able to extract the address of the application activation information server 4 described in the p/f region of the EIT in the SI table contained in the TS of the digital broadcast, and obtain the application activation information from the application activation information server 4. Further, the integrated broadcasting communications receiver 2L is, by including the push notification permission unit 32a, able to obtain the application activation information according to the push notification from the push notification server 5.

As a result, since the integrated broadcasting communications receiver 2L is able to reliably receive the application activation information transmitted by using the existing broadcast facilities from the broadcast transmitting apparatus 1, it is possible to reduce costs for receiving the application activation information. Further, the integrated broadcasting communications receiver 2L is able to receive the application activation information even if the application activation information is provided in different ways respectively from the plurality of broadcast stations (the plurality of broadcast transmitting apparatuses 1).

### [Integrated Broadcasting Communications Receiving Program]

Note that, the functions of the integrated broadcasting communications receivers 2 to 2L according to the above-described embodiments may be realized by computers. In other words, the integrated broadcasting communications receivers 2 to 2L may be operated by programs for making the computers function as the above-described respective units. In this case, it is possible to make the programs function by storing the programs in a computer-readable recording medium, loading the programs stored in the recording medium into a computer system, and executing the programs.

Here, the "computer system" is intended to include an OS and hardware such as peripheral devices. Further, it is possible to make respective functions operate in parallel by using a multitasking OS as the OS. Further, the "computer-readable recording medium" means a portable medium such as a flexible disk, a magneto-optical disk, a ROM, and a CD-ROM, or a storage device such as a hard disk built in the computer system.

Further, the "computer-readable recording medium" may contain those holding the program dynamically for a short time like a communication line in a case where the program is transmitted via the communication line such as a telephone line and a network such as the internet, and those holding the program for a certain period of time like a volatile memory in the computer system which is a server or a client in that case. Moreover, the program may be a program for realizing a part of the above-described functions, and further may be a program to realize the above-described functions in combination with a program already stored in the computer system.

The integrated broadcasting communications receivers 2 to 2L according to the present invention has been specifically described above, however, the spirit of the invention is not limited thereto and should be understood broadly based on descriptions in claims. Further, it is needless to say that various changes, modifications, and the like based on these descriptions are included in the spirit of the invention.

For example, the above-described integrated broadcasting communications receivers 2 to 2L are provided with respective storing units inside thereof, however, the storing units may be provided outside thereof.

Further, the above-described integrated broadcasting communications receivers 2, 2E, 2F, 2G are configured to extract the application activation information described in the p/f region of the EIT in the SI table contained in the TS inputted from the broadcast transmitting apparatus 1 by the application activation information extracting part 220, however, the application activation information may be described in a SDT (Service Description Table) in the SI table. Incidentally, the SDT means a table in which basic information about a service such as a service name and a service provider name is described.

Further, the above-described integrated broadcasting communications receivers 2B, 2E, 2H, 2K, 2L are configured to extract the address of the application activation information server 4 described in the p/f region of the EIT in the SI table contained in the TS inputted from the broadcast transmitting apparatus 1 by the application activation information server address extracting part 221, however, the address of the application activation information server 4 may be described in the SDT in the SI table.

Further, the above-described integrated broadcasting communications receivers 2C, 2F, 2I, 2K are configured to extract the address of the push notification server 5 described in the p/f region of the EIT in the SI table contained in the TS inputted from the broadcast transmitting apparatus 1 by the push notification server address extracting part 222, however, the address of the push notification server 5 may be described in the SDT in the SI table.

Further, the above-described integrated broadcasting communications receivers 2C, 2F, 2I, 2K receives the address of the push notification server 5 provided outside by the broadcast wave W, however, a push management server 6 for managing the push notification server 5 may be provided outside, and the receivers may be configured to receive the address of the push management server 6 by the broadcast wave W.

Further, the above-described integrated broadcasting communications receivers 2C, 2F, 2I, 2K receives the address of the push notification server 5 provided outside by the broadcast wave W, however, the receivers may be configured to store in advance the address of the push notification server 5 in an unillustrated storage unit.

Further, the above-described integrated broadcasting communications receivers 2C, 2F, 2I, 2K receives the address of the push notification server 5 provided outside by the broadcast wave W, however, the push notification server 5 may be single or plural. Note that, the single push notification server 5 means, for example, a case in which plural broadcast stations use a common push notification server 5. Meanwhile, the plural push notification servers 5 mean, for example, a case in which the plural broadcast stations respectively use the push notification servers 5 provided for respective broadcast stations.

Further, the above-described integrated broadcasting communications receivers 2D, 2G, 2J, 2L are configured to obtain the list of the push notification servers 5 performing the push notification by the push notification server list requesting part 320, however, the receivers may be configured to store in advance the list of the push notification servers 5 in an unillustrated storage unit.

Further, the above-described integrated broadcasting communications receivers 2C, 2D, 2F, 2G, 2I, 2J, 2K, 2L are described as examples to contain in the push notification the address of the application activation information server 4 storing the application activation information, however, the application activation information may be directly contained in the push notification.

### {Reference Signs List}

- 1:: broadcast transmitting apparatus
- 2, 2A, 2B, 2C, 2D, 2E, 2F, 2G, 2H, 2I, 2J, 2K, 2L:: integrated broadcasting communications receiver
- 3:: application server
- 4:: application activation information server
- 5:: push notification server
- 6:: push management server
- 21:: broadcast receiving unit
- 22, 22a, 22b, 22c, 22d, 22e, 22f:: broadcast signal analyzing unit
- 23:: video/audio decoding unit
- 24, 24a:: data broadcast decoding unit
- 25:: application controlling unit
- 26:: application obtaining unit
- 27:: communication transmitting and receiving unit
- 28:: application storing unit
- 29:: application executing unit
- 30:: composing and displaying unit
- 31:: application activation information obtaining unit
- 32, 32a:: push notification permission unit
- 33:: operation controlling unit
- 34:: push management server address storing unit
- 35:: push notification server list storing unit
- 220, 240:: application activation information extracting part
- 221:: application activation information server address extracting part
- 222:: push notification server address extracting part
- 320:: push notification server list requesting part
- 321:: comparing part
- Mo:: monitor
- N:: communication line
- Re:: remote controller
- W:: broadcast wave

## Claims

1. An integrated broadcasting communications receiver for receiving broadcast data via a broadcast wave from a broadcast transmitting apparatus and obtaining an application associated with a content contained in the broadcast data via a communication line from an application server, comprising:
an application activation information extracting unit that extracts application activation information for obtaining and controlling the application from an event information table contained in a transport stream of the broadcast data transmitted by the broadcast transmitting apparatus;
an application obtaining unit that obtains the application from the application server with reference to an address of the application server described in the application activation information;
an application executing unit that executes the application; and
an application controlling unit that controls an activation state of the application executed by the application executing unit in accordance with a control code described in the application activation information.

2. The integrated broadcasting communications receiver as set forth in claim 1, wherein the application activation information extracting unit extracts the application activation information from a p/f region of the event information table.

3. The integrated broadcasting communications receiver as set forth in claim 1, further comprising:
an application activation information server address extracting unit that extracts an address of an application activation information server storing the application activation information from the event information table contained in the transport stream of the broadcast data transmitted by the broadcast transmitting apparatus; and
an application activation information obtaining unit that obtains the application activation information from the application activation information server with reference to the address of the application activation information server.

4. The integrated broadcasting communications receiver as set forth in claim 1, further comprising:
a push notification server address extracting unit that extracts an address of a push notification server performing a push notification for controlling the activation state of the application associated with the content by a broadcast station providing the content, from the event information table contained in the transport stream of the broadcast data transmitted by the broadcast transmitting apparatus; and
a push notification permission unit that notifies the push notification server that the push notification is permitted with reference to the address of the push notification server, wherein
the application activation information obtaining unit obtains the application activation information from the application activation information server with reference to the address of the application activation information server described in the push notification notified by the push notification server.

5. The integrated broadcasting communications receiver as set forth in claim 1, further comprising:
a push notification server list requesting unit that requests a list of broadcast stations having performed instructions of the push notifications to the push notification servers, from a push management server managing a push notification server which performs a push notification for controlling the activation state of the application associated with the content by a broadcast station providing the content; and
a comparing unit that compares broadcast stations described in the push notification server list and a broadcast station providing the content currently being viewed, wherein
the comparing unit notifies the push notification server that the push notification is permitted if a broadcast station described in the push notification server list matches the broadcast station providing the content currently being viewed, and
the application activation information obtaining unit obtains the application activation information from the application activation information server with reference to the address of the application activation information server described in the push notification notified by the push notification server.
